# EUROPEAN PATENT APPLICATION

(11) **EP 2 645 387 A1**
(43) Date of publication of application: **02.10.2013**
(21) Application number: 11843173.3
(22) Date of filing: 16.11.2011
(51) Int. Cl.: H01H 9/02, H04Q 9/00

(54) **LOAD-CONTROL SWITCH AND LOAD-CONTROL SWITCH SYSTEM**

(30) Priority: 24.11.2010 JP 2010261609; 24.11.2010 JP 2010261773; 24.11.2010 JP 2010261619; 24.11.2010 JP 2010261780; 24.11.2010 JP 2010261787; 24.11.2010 JP 2010261631
(71) Applicant: Panasonic Corporation, Osaka 571-8501 (JP)
(72) Inventor: HIGASHIHAMA, Hirotada, Osaka 540-6207 (JP); KOHROGI, Takeshi, Osaka 540-6207 (JP); TANIKAGA, Yoko, Osaka 540-6207 (JP); MATSUMOTO, Kazuhiro, Osaka 540-6207 (JP); NAGATA, Masahiro, Osaka 540-6207 (JP); UEDA, Shinsuke, Osaka 540-6207 (JP); YOSHIKI, Kazuhisa, Osaka 540-6207 (JP)
(74) Representative: Haydn, Christian
(86) International application number: PCT/JP2011/076365
(87) International publication number: WO 2012/070439

(57) **Abstract**

A load control switch (1) is provided with a terminal module (2) to which electric wires are connected and which is installed on an installation frame established on a wall surface of a building; and a switch module (3) which is detachably mounted to the terminal module (2) and which turns a load on or off. The load control switch (1) is also provided with an operation handle (4) detachably attached to the switch module (3). The switch module (3) may be an electronic switch or a mechanical switch; an electronic switch may additionally be provided with delay function, timer function, a motion sensor, and so on. This makes it possible for a user to freely replace one load control switch with another having different function without electrical work being required.

## Description

### TECHNICAL FIELD

The present invention relates to a load control switch and a load control switch system, which can easily be replaced even if personnel does not have a qualification of registered electrician.

### BACKGROUND ART

As for a load control switch, which is to be installed on a wall surface of a building and controls turning on and off of a load such as a ventilation fan or a lighting installation, one having an indication function, a delay function, a light control function, a radio signal reception function, a sensor function, or the like, other than one which simply controls on/off, is known. For example, it is not improbable that a simple on/off switch is desired to be replaced with a switch having a light control function following to replacement of the lighting installation, or a switch for a lighting installation in an entrance is desired to be replaced with one having a motion sensor (a human body detection sensor). In the conventional system, the load control switch must be replaced wholly and it needs wiring works, so that a user cannot replace the switch by oneself, and it must be relied on a person having a qualification of registered electrician.

On the other hand, as it is called DIY (Do It Yourself) recently, it is a fashion that a user purchases components in DIY stores (Home Center) and performs replacement of the components by oneself. In current system, as described in a catalogue of electric installations and materials of Panasonic Electric Works, 2010 2012, Page 19, for example, the user can select colors and designs of operation handles in DIY stores, at the best, botheration that the main body of the load control switch cannot be replaced freely remains.

### DISCLOSURE OF INVENTION

The present invention is conceived to solve the above mentioned problems of the prior art and aimed to provide a load control switch and a load control switch system which enable a user to replace a load control switch to one having different function freely accompanying no wiring works.

A load control switch in accordance with an aspect of the present invention is characterized by comprising a terminal module which is installed on an installation frame established on a wall surface of a building and to which electric wires are connected, a switching function module which is detachably attached to the terminal module and has at least a switching function to control turning on and off of a load, and an operation handle which is detachably attached to the switching function module.

According to such a constitution, since the load control switch is separated into at least the terminal module to which the electric wires are connected and the switching function module which is detachably attached on the terminal module, it is sufficient to install only the terminal module on the wall surface of the building or the like, beforehand. Then, a user can make a selection only the switching function module or combination of the switching function module and the operation handle freely and install or replace it or them by oneself without performing the wiring works.

A load control switch system in accordance with an aspect of the present invention characterized by that the system is constituted by a terminal module which is mounted on a installation frame established on a wall surface of a building and to which electric wires are connected, plural switching function modules each of which is detachably attached on the terminal module and has at least a switching function to control turning on and off of a load, and plural operation handles each of which is detachably attached to the switching function module, and wherein a load control switch is constituted by mounting a switching function module selected among the plural switching function modules and an operation handle selected among the plural operation handles on the terminal module.

According to such a constitution, when the terminal module is installed beforehand, a user can replace the load control switch by oneself by purchasing a switching function module and an operation handle which meet the purpose in DIY store, or the like. Thereby, the wiring works for replacing the load control switch becomes needless.

### BRIEF DESCRIPTION OF THE DRAWINGS

[FIG. 1]

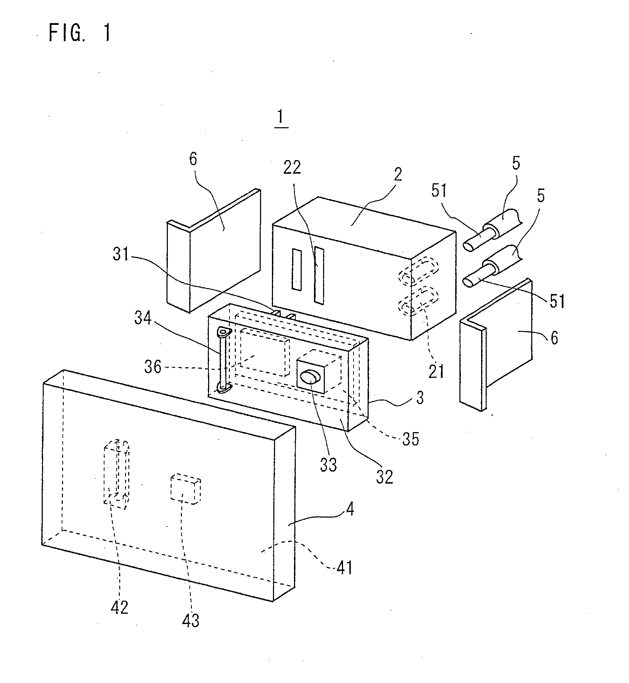

   FIG. 1 is a perspective view of a load control switch included in a load control switch system in accordance with a first embodiment of the present invention.
[FIG. 2]

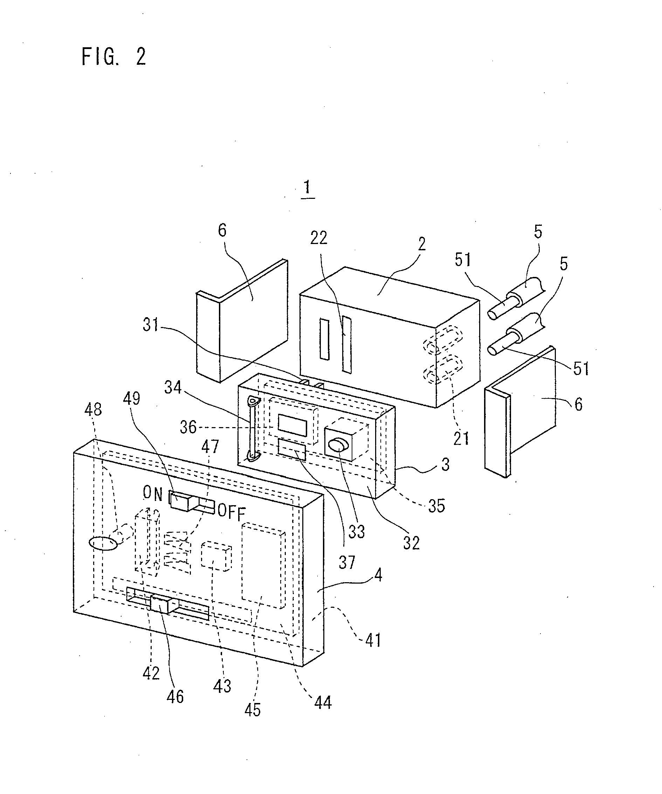

   FIG. 2 is a perspective view of a load control switch in a first modified example of the above embodiment.
[FIG. 3]

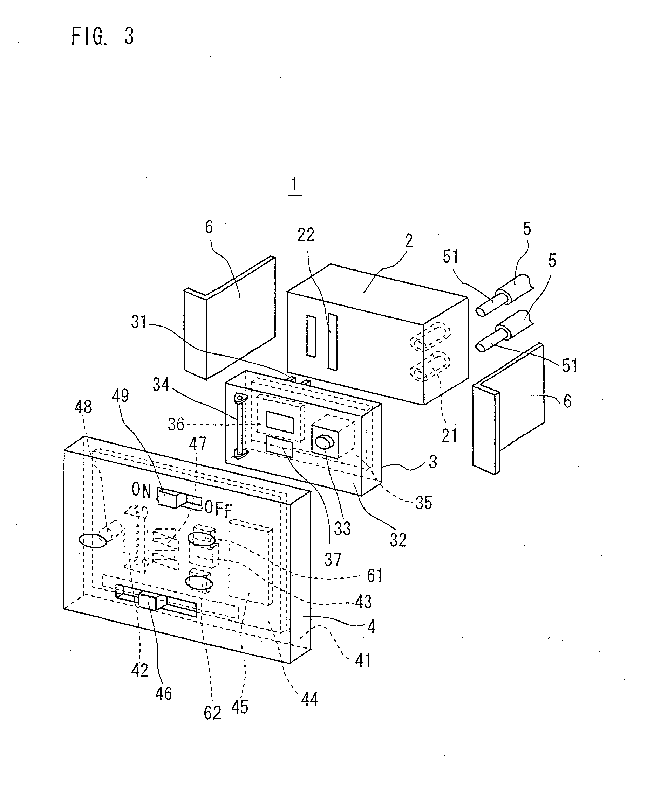

   FIG. 3 is a perspective view of a load control switch in a second modified example of the above embodiment.
[FIG. 4]

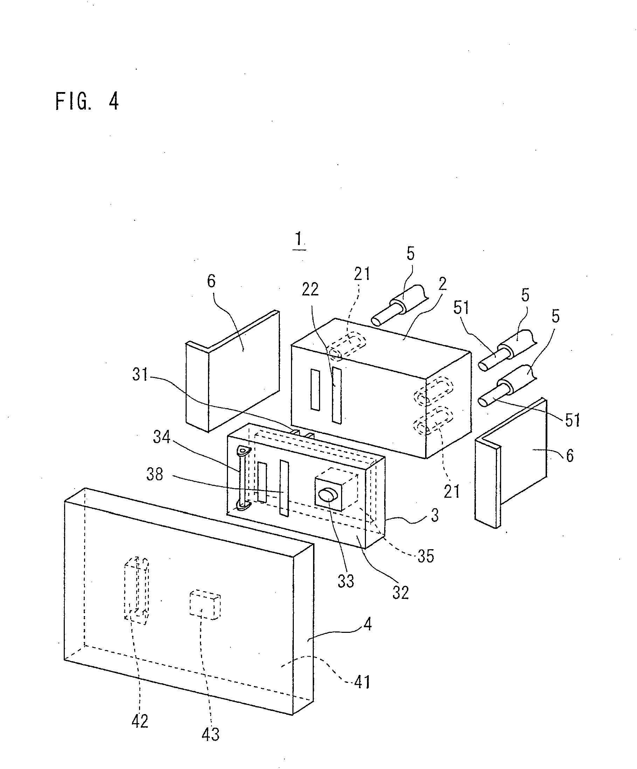

   FIG. 4 is a perspective view of a load control switch in a third modified example of the above embodiment.
[FIG. 5]

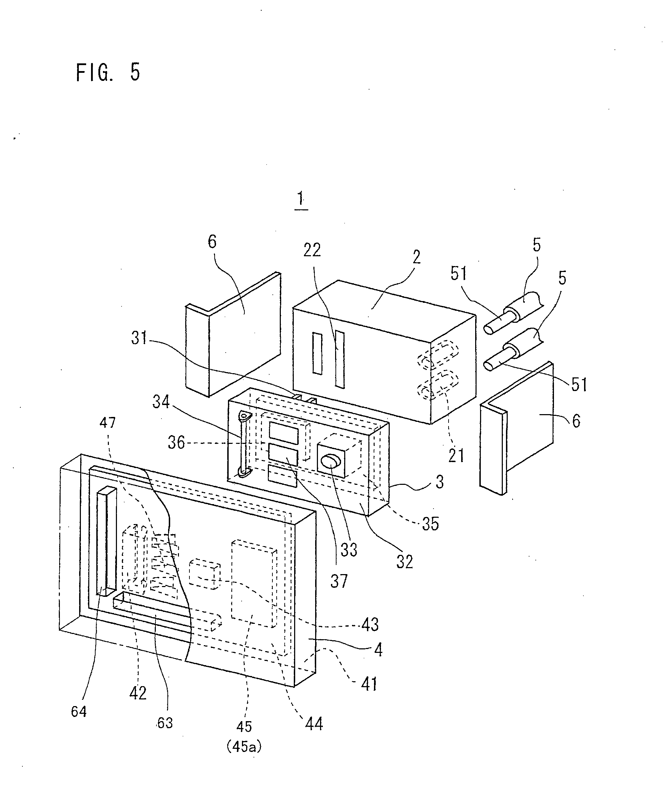

   FIG. 5 is a perspective view of a load control switch in a fourth modified example of the above embodiment.
[FIG. 6]

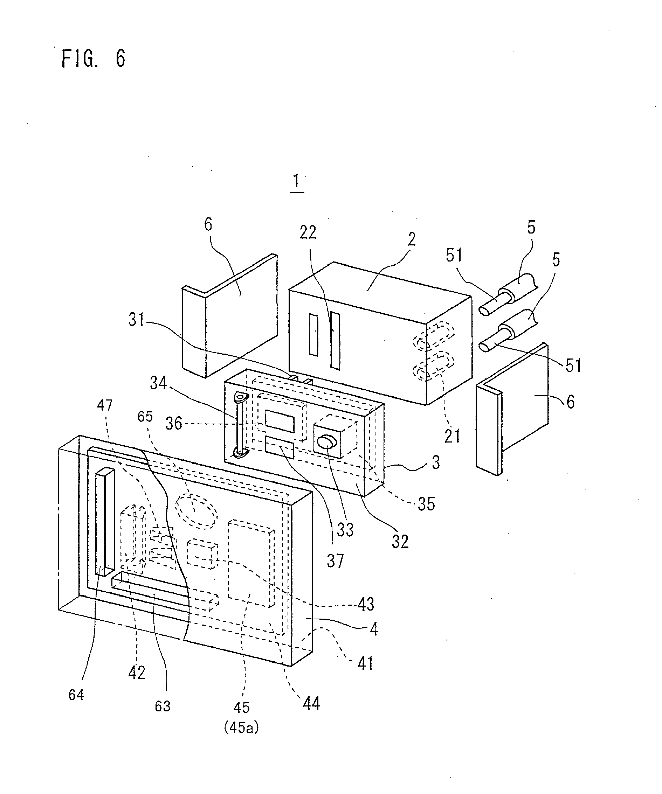

   FIG. 6 is a perspective view of a load control switch in a fifth modified example of the above embodiment.
[FIG. 7]

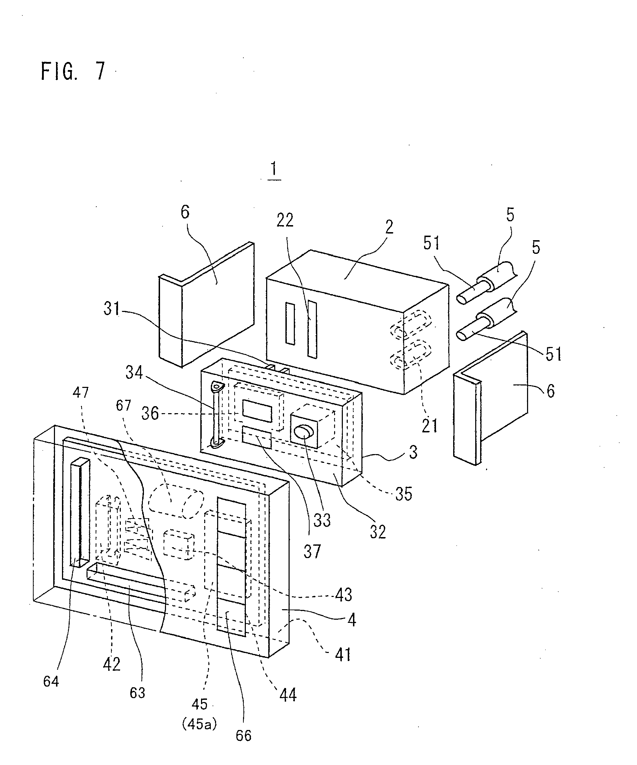

   FIG. 7 is a perspective view of a load control switch in a sixth modified example of the above embodiment.
[FIG. 8]

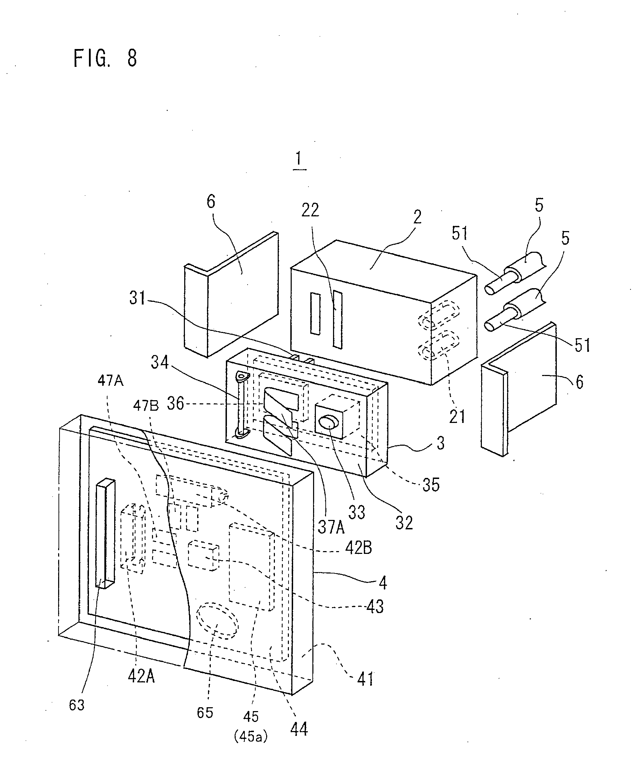

   FIG. 8 is a perspective view of a load control switch in a seventh modified example of the above embodiment.
[FIG. 9]

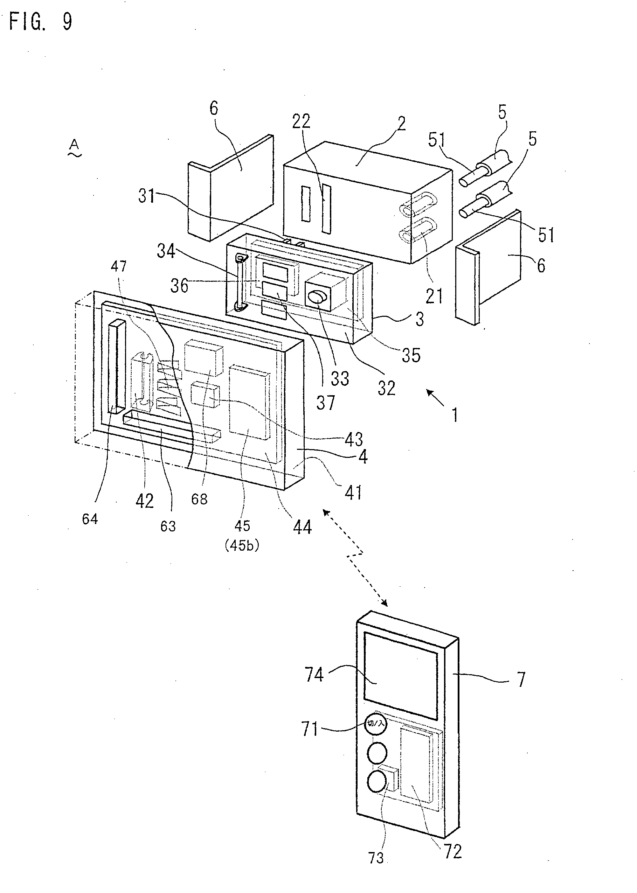

   FIG. 9 is a perspective view showing a constitution of a load control switch system in accordance with an eighth modified example of the above embodiment.
[FIG. 10]

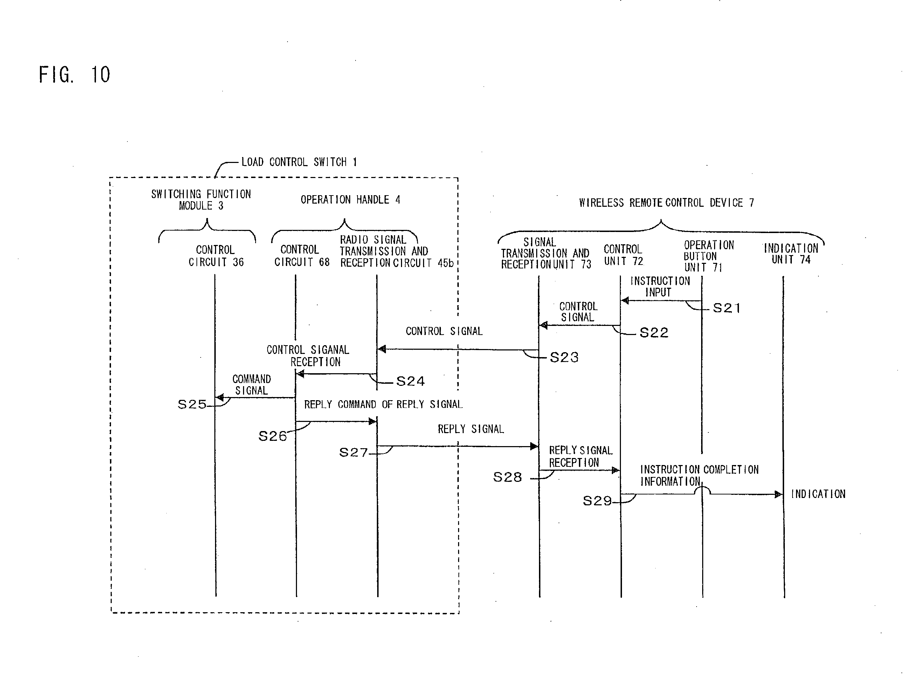

   FIG. 10 is a sequence chart when a reply signal is sent from a load control switch to a wireless remote control device in the load control switch system.
[FIG. 11]

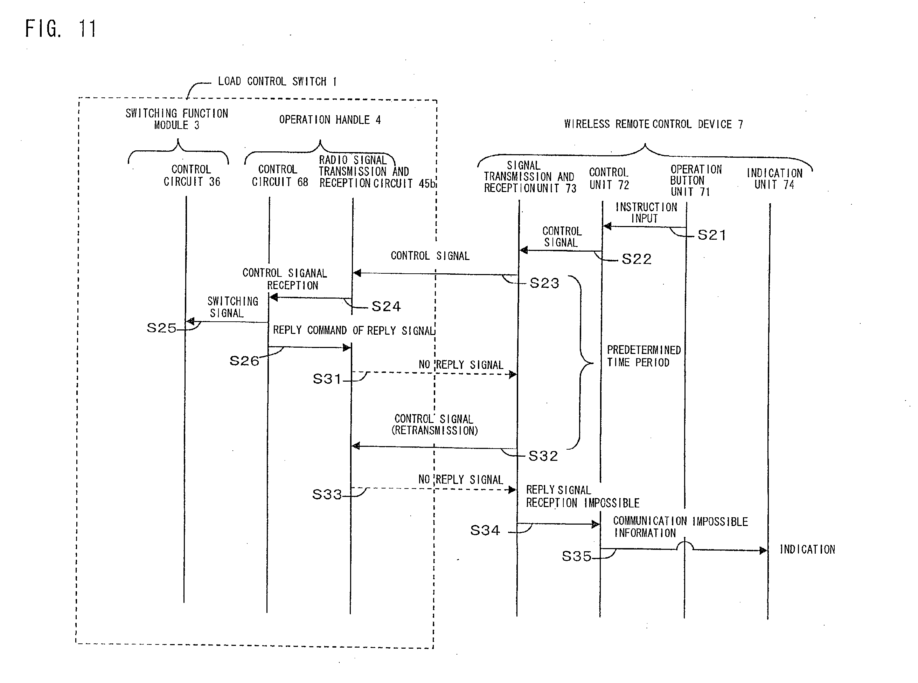

   FIG. 11 is a sequence chart when no reply signal is sent from a load control switch to a wireless remote control device in the load control switch system.
[FIG. 12]

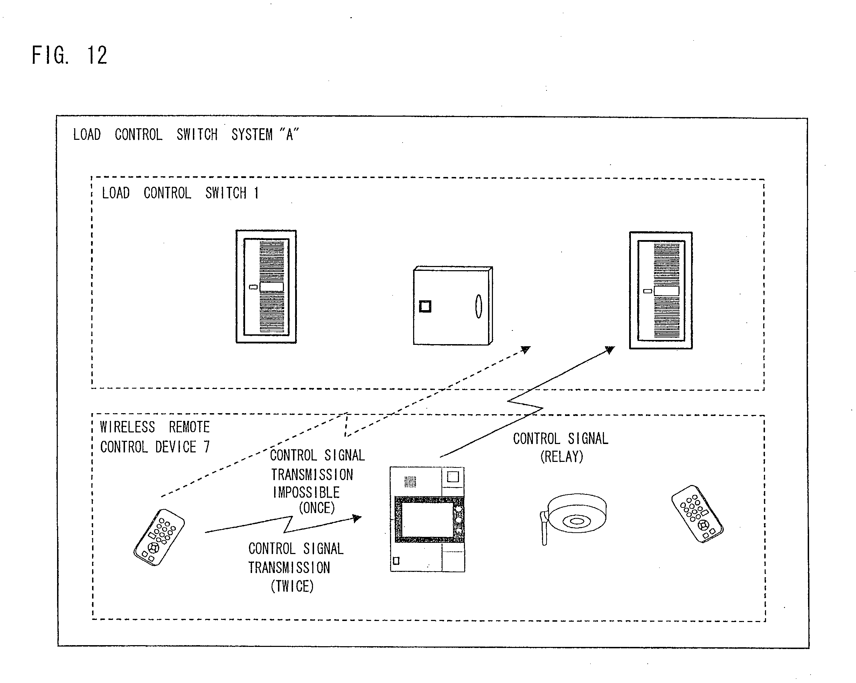

   FIG. 12 is an explanation view when a control signal is relayed out with using another wireless remote control device in the load control switch system.
[FIG. 13]

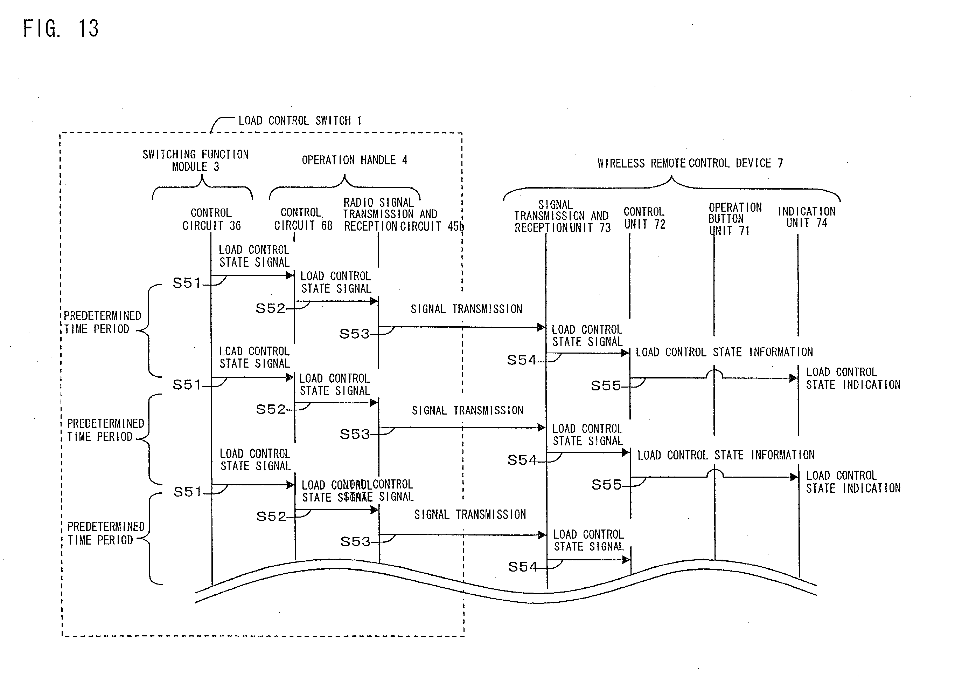

   FIG. 13 is a sequence chart when switching condition signals are transmitted at a regular interval from a switching control module to a wireless remote control device in the load control switch system regularly.
[FIG. 14]

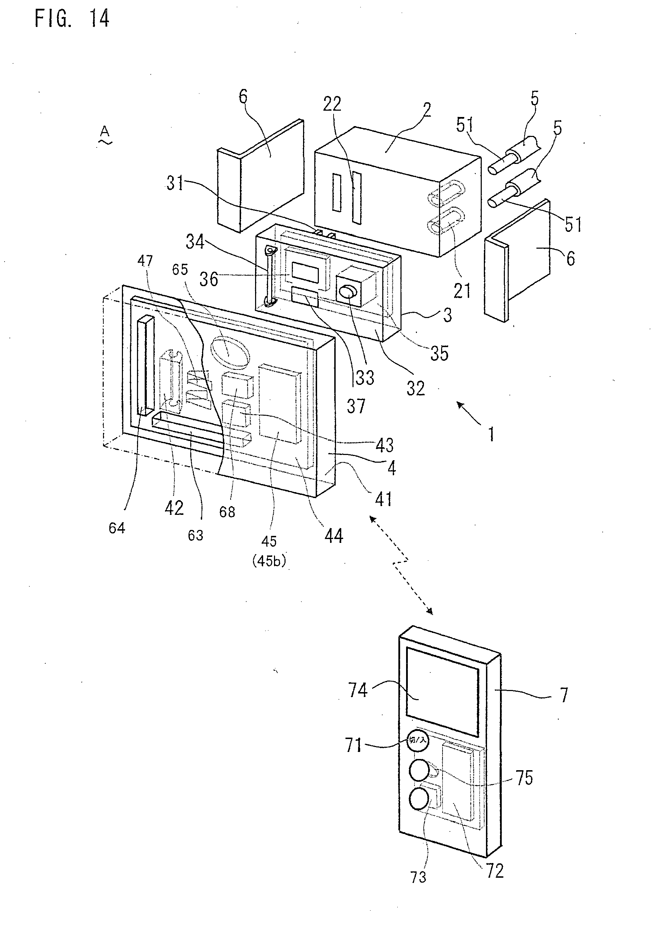

   FIG. 14 is a perspective view showing a constitution of a load control switch system in accordance with a ninth modified example of the above embodiment.
[FIG. 15]

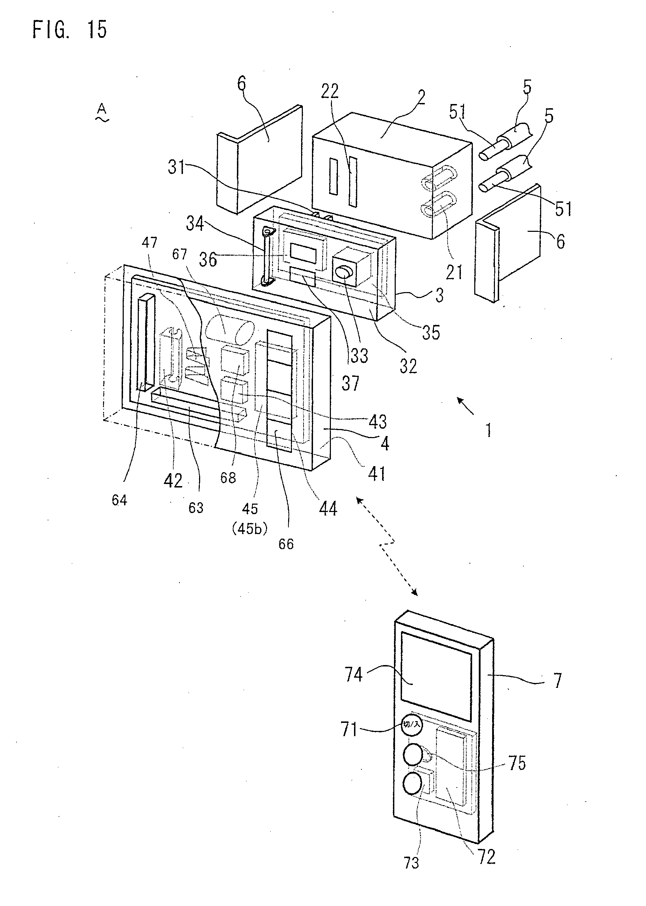

   FIG. 15 is a perspective view showing a constitution of a load control switch system in accordance with a tenth modified example of the above embodiment.
[FIG. 16]

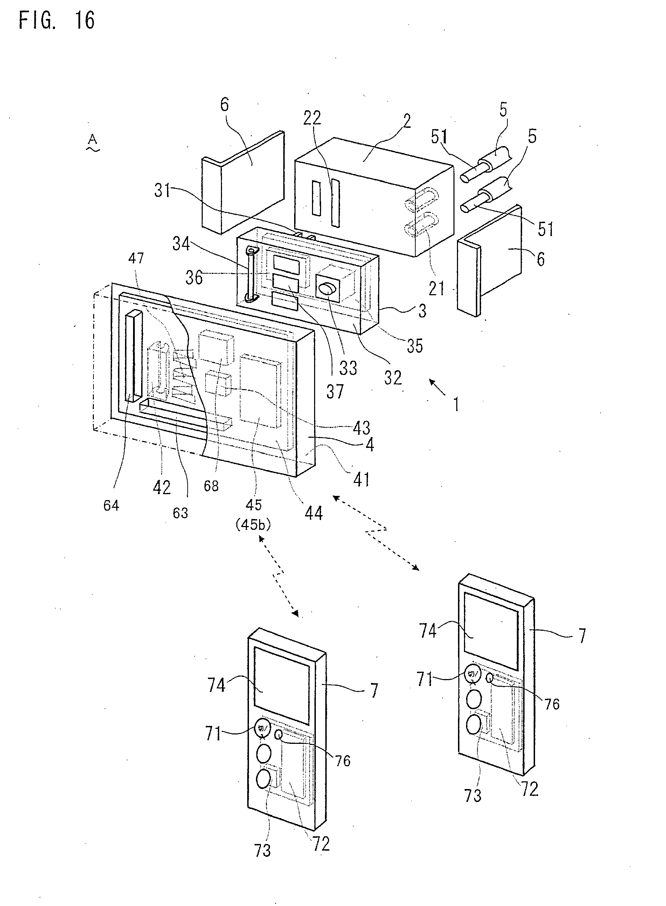

   FIG. 16 is a perspective view showing a constitution of a load control switch system in accordance with an eleventh modified example of the above embodiment.
[FIG. 17]

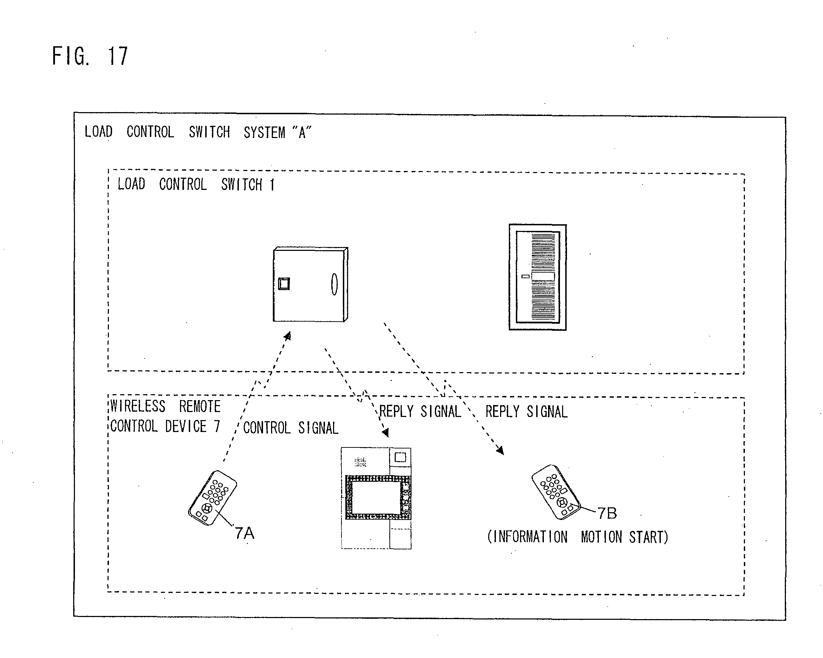

   FIG. 17 is an explanation view when a reply signal is transmitted to another wireless remote control device in the load control switch system.
[FIG. 18]

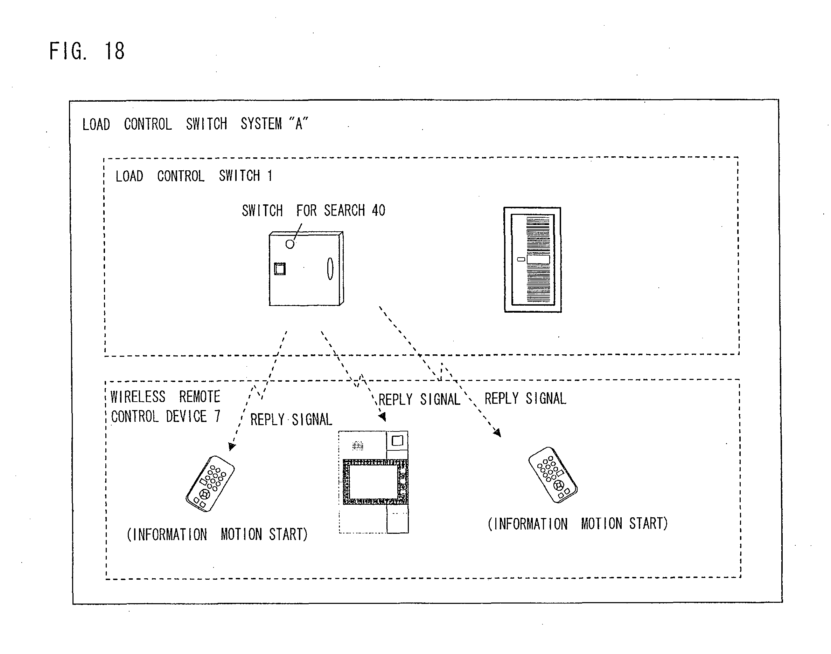

   FIG. 18 is an explanation view when a reply signal is transmitted from an operation handle to a wireless remote control device in the load control switch system.
[FIG. 19]

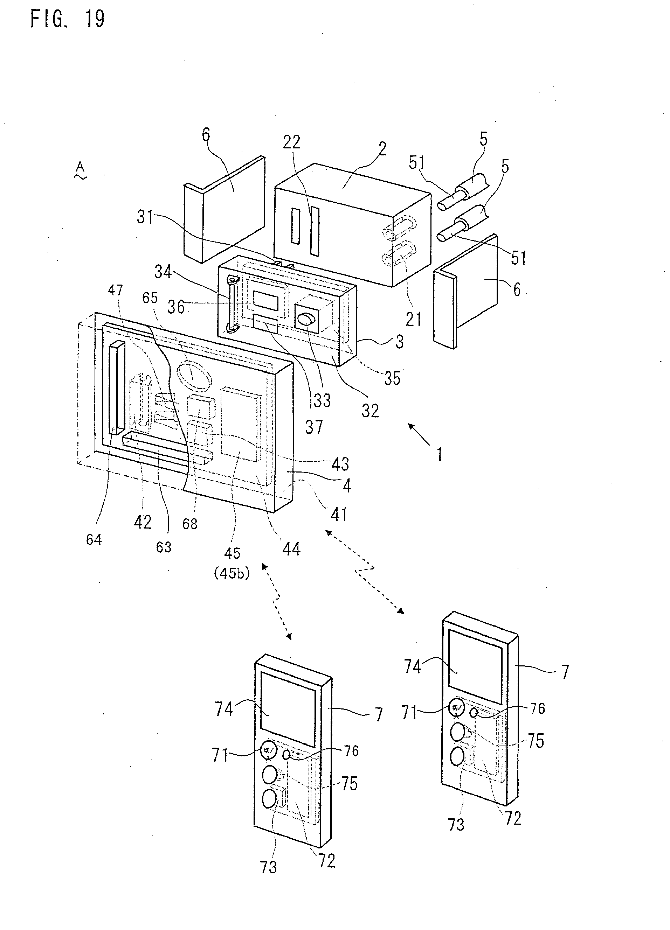

   FIG. 19 is a perspective view showing a constitution of a load control switch system in accordance with a twelfth modified example of the above embodiment.
[FIG. 20]

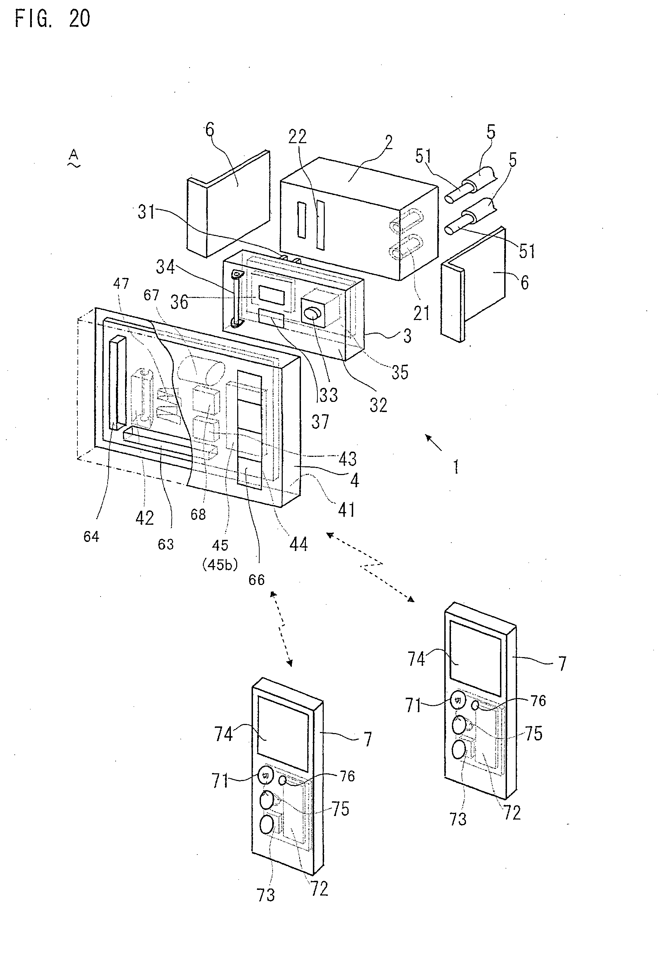

   FIG. 20 is a perspective view showing a constitution of a load control switch system in accordance with a thirteenth modified example of the above embodiment.
[FIG. 21]

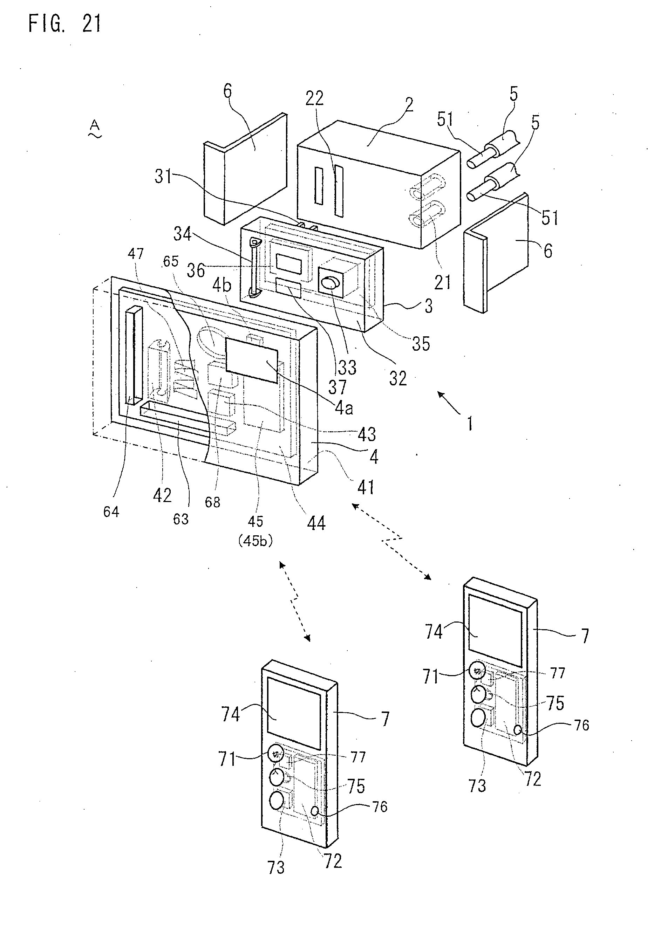

   FIG. 21 is a perspective view showing constitution of a load control switch system in accordance with a fourteenth modified example of the above embodiment.
[FIG. 22]

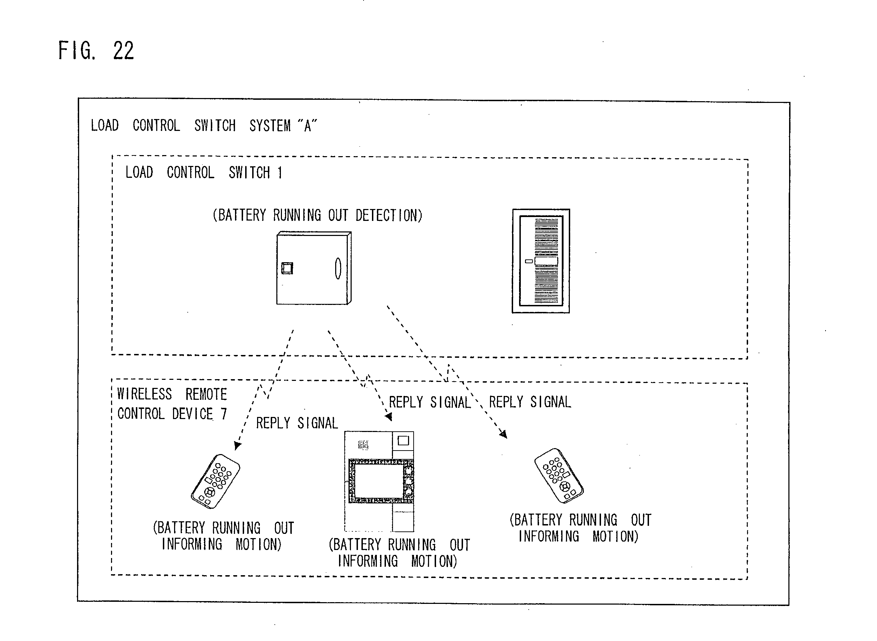

   FIG. 22 is an explanation view when a battery of a wireless remote control device is run out in the load control switch system.
[FIG. 23]
   FIG. 22 is an explanation view when a battery of an operation handle is run out in the load control switch system.
[FIG. 24]

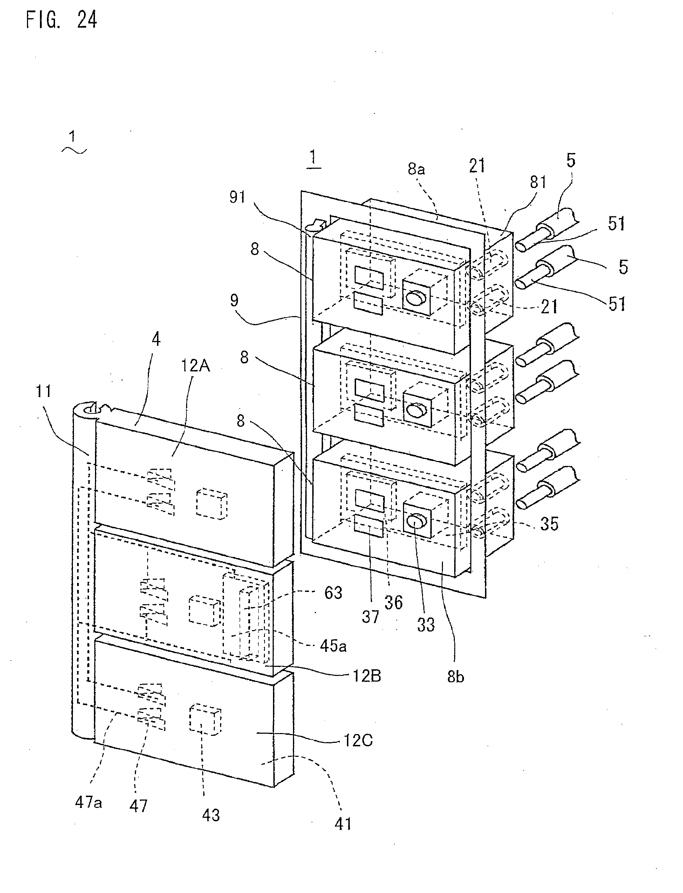

   FIG. 24 is a perspective view showing a constitution of a load control switch system in accordance with a second embodiment of this invention.
[FIG. 25]

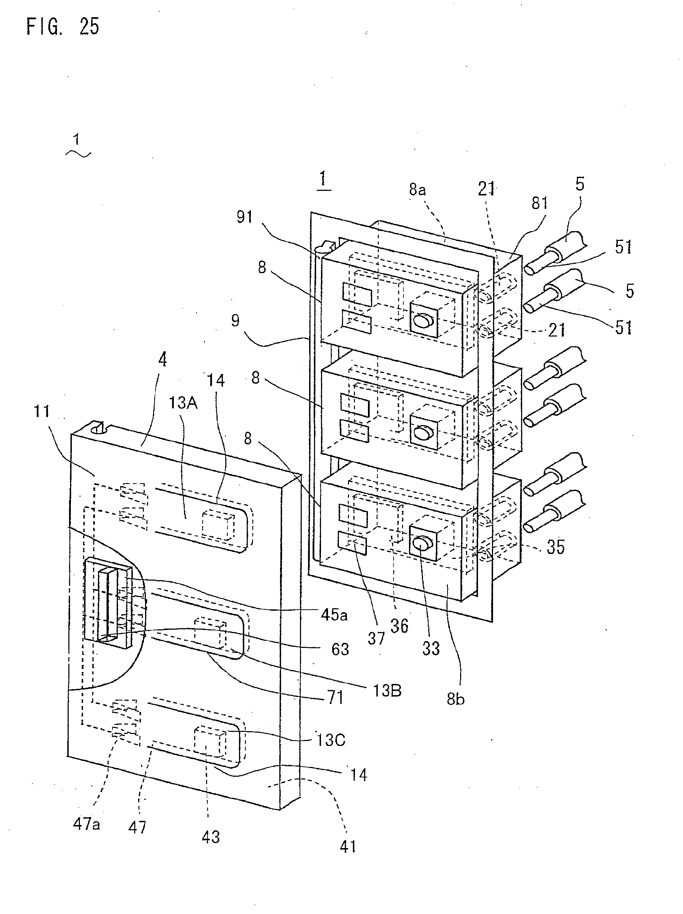

   FIG. 25 is a perspective view showing a constitution of a load control switch system in accordance with a first modified example of the above embodiment.
[FIG. 26]

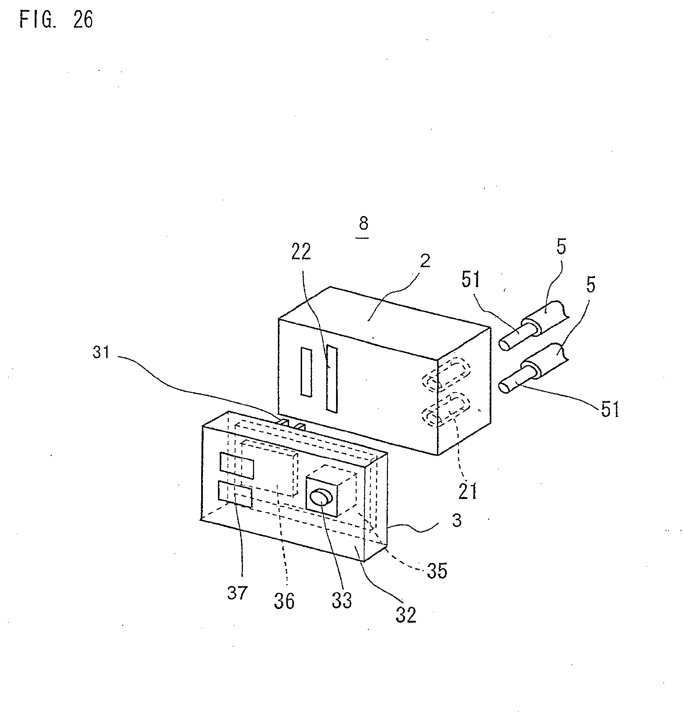

   FIG. 26 is a perspective view showing a constitution of a load control switch in a second modified example of the above embodiment.
[FIG. 27]

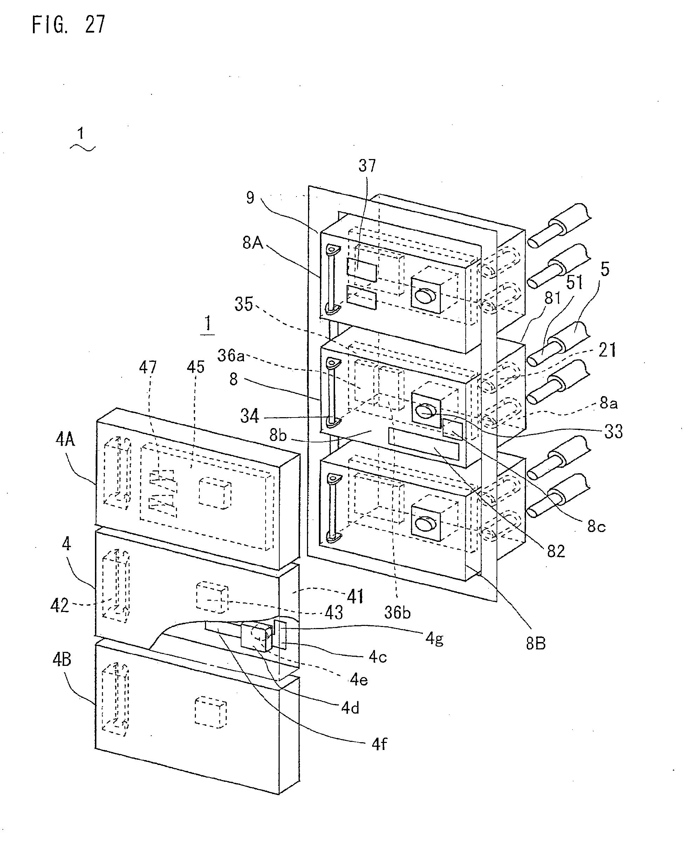

   FIG. 27 is a perspective view showing a constitution of a load control switch system in accordance with a third modified example of the above embodiment.
[FIG. 28]

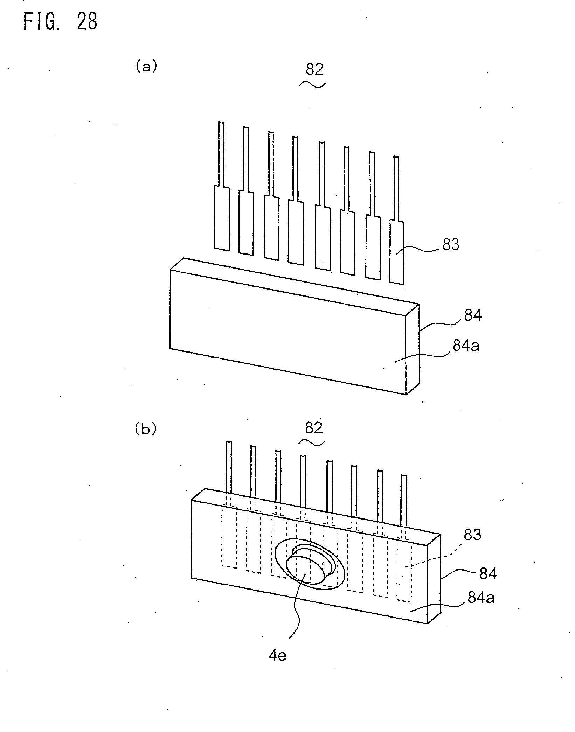

   FIG. 28 (a) is a perspective view showing a constitution example of a delay function selecting switch which is provided on a load control switch in the above load control switch system, and FIG. 28 (b) is a perspective view showing a state that a second projection of a displacement member contacts a contact surface of the delay function selecting switch.
[FIG. 29]

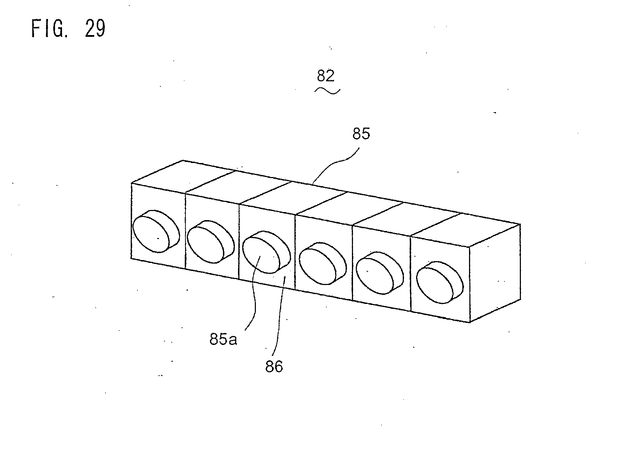

   FIG. 29 is a perspective view showing another constitution example of the above delay function selecting switch.
[FIG. 30]

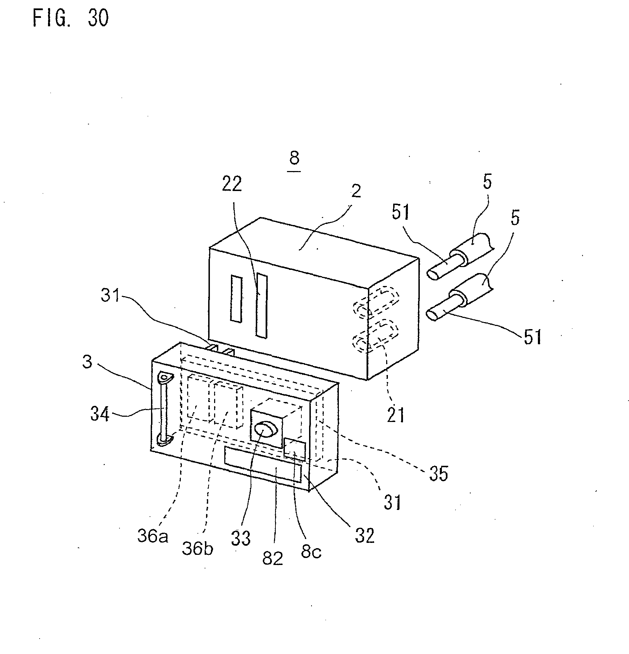

   FIG. 30 is a perspective view showing a constitution of a load control switch in a fourth modified example of the above embodiment.
[FIG. 31]

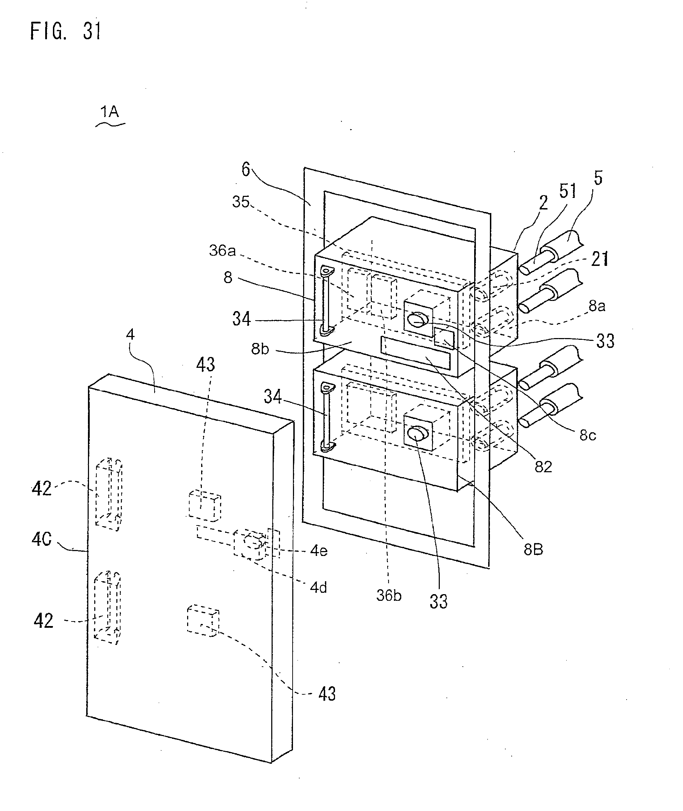

   FIG. 31 is a perspective view showing an application of a load control switch in the above third modified example.

### MODE FOR CARRYING OUT THE INVENTION

### (First Embodiment)

A load control switch system in accordance with a first embodiment of the present invention is described. FIG. 1 is a drawing showing a basic constitution of a load control switch 1 included in the load control switch system of this embodiment. The load control switch 1 is constituted by a terminal module 2 to which electric wires 5 are connected, a switching function module 3 which has a switching function to control turning on and off of a load through the electric wires 5, and an operation handle 4. The terminal module 2 is installed on an installation frame which is established on a wall surface of a building. The switching function module 3 is detachably attached to the terminal module 2. The operation handle 4 is detachably attached to the switching function module 3. The electric wires 5 consist of VVF (Vinyl insulated Vinyl sheathed Flat-type cable: 600V vinyl insulation vinyl sheath cable flat-type) or the like.

The terminal module 2 comprises inlets 21 into which core wires 51 of the electric wires 5 that insulation coatings are peeled off are inserted and outlets 22 into which sockets 31 of the switching function module 3 are inserted. The inlets 21 each are similar to those of the conventional load control switch which are automatically locked when the core wires 51 of the electric wires 5 are inserted. The constitution of the outlets 22 each is not limited in particular, and it may be electric contact simply or be a structure like a wall socket. In the latter case, a sliding shutter may be established in the outlet 22 to prevent an electric shock. In addition, as for the terminal module 2, a structure for two wire system is exemplified in FIG. 1, it may be for three wire system. Since the terminal module 2 is installed by a person having specialist knowledge such as a registered electrician, according to the constitution of this embodiment, when the terminal module 2 is installed once, it is not replaced, usually. In addition, the terminal module 2 is smaller than that of the conventional load control switch, due to the switching function module 3 is decomposed therefrom. Therefore, an adapter 6 is used when it is installed on a conventional installation frame.

As for the switching function module 3, an electronic switch, which uses a semiconductor switch element as a main switch element, is exemplified, for example. A push-on / push-off switch 33, which is operated by the operation handle 4, is provided on a mounting surface 32 of switching function module 3 to which the operation handle 4 is attached to. In addition, a bracing shaft 34, which is fit to a bearing 42 provided on a rear face 41 of the operation handle 4, is provided on the mounting surface 32 of the switching function module 3. A projection 43, which contacts the push-on / push-off switch 33 in a state that the bearing 42 is fit to the bracing shaft 34, that is, the operation handle 4 is attached to the switching function module 3, is provided on the rear face 41 of the operation handle 4. The operation handle 4 is formed asymmetry with respect to the bracing shaft 34 (or the bearing 42), and it is held in one-sided by a spring of the push-on / push-off switch 33, generally.

As generally known from the above catalogues or the like, size of the operation handle 4 is decided by a number of the load control switches installed on a single installation frame. For example, when only one load control switch is mounted on an installation frame, an operation handle called "single" having substantially the same size as that of a rectangular opening formed on a decorative plate is used. Alternatively, when two load control switches are mounted on an installation frame, operation handles called "double" each having a 1/2 size of a dimension in height direction of the rectangular opening formed on the decorative plate are used (dimensions in widthwise direction are the same). Furthermore, when three load control switches are mounted on an installation frame, operation handles called "triple" each having a 1/3 size of a dimension in height direction of the rectangular opening formed on the decorative plate are used. As well as the conventional case, it is needless to say that they can be selected among plural colors and designs.

A circuit board 35 is provided in an inside of the switching function module 3, and a control circuit 36 which constituted by a semiconductor switch element such as a triac is mounted on the circuit board 35. When the operation handle 4 is operated by a user; the push-on / push-off switch 33 is switched on or off, and thereby, the electric load is turned on or off. When the switching function module 3 is an electronic switch, various functions can be realized by combining various kinds of sensors such as a motion sensor and an illumination sensor and electronic circuits such as a delay circuit, a timer circuit, a radio communication circuit and so on.

In this embodiment, even when the terminal module 2 is installed beforehand, a user can replace the load control switch by oneself by purchasing a switching function module meeting the purpose and an applicable operation handle in the DIY store or the like. For example, it is assumed that the most popular priced mechanical switch was attached as the switching function module 3 when entering into a new residence, if the user wishes to use a light control function of a lighting installation, he/she may purchase a switching function module with light control function and an applicable operation handle and replace them by oneself. Thereby, it will be no need to ask an electric engineering firm, for example, for the wiring works, and thus, it is possible to improve or to change the function of the load control switch with low cost at any optional time. Besides, the load control switch system in accordance with the present invention is constituted by a terminal module 2 in a two wire system or in a three wire system for example, plural kinds of switching function modules 3 exemplified in the above embodiment and plural kinds of operation handles 4 applicable, and so on.

Modified examples of the load control switch system in accordance with this embodiment are described below. Equivalent constitutions and effects among the above embodiment and modified examples or among the modified examples are omitted.

### (First Modified Example of the First Embodiment)

In a load control switch 1 of the first modified example shown in FIG. 2, a circuit board 44 is provided in an inside of the operation handle 4, and an external electronic circuit 45 and a sliding volume 46 which is operated by a user are mounted on the circuit board 44. Furthermore, plural (for example, it is exemplified in two) first contacts 37 are provided on a mounting surface of a switching function module 3 applicable to the operation handle 4, and plural (generally, same number) second contacts 47 are provided on a rear face 41 of the operation handle 4. Thereby, a control circuit 36 of an electronic switch and the external electronic circuit 45 are connected through the first contacts 37 and the second contacts 47.

For example, when a lighting installation such as an incandescent lamp or LEDs is connected as a load, it is effective to provide a light control function to the load control switch. In such a case, the volume 46 is used as a light control volume serving a part of a light control circuit, and a main part of the light control function may be provided in the control circuit 36 side of the electronic switch. In addition, when a ventilation fan for a bathroom is connected as a load, it is effective to provide a timer function into the load control switch. In such a case, the volume 46 is used as a time setting volume of a timer circuit, and a main part of a timer function may be provided in either the control circuit 36 side of the electronic switch or the external electronic circuit 45 side of the operation handle 4. Furthermore, when a ventilation fan for a restroom is connected as a load, it is effective to provide a delay function into the load control switch. When using the delay function regularly, a delay circuit may be provided in the control circuit 36 side of the electronic switch, and the load mat be turned off after passing a predetermined time period when a push-on / push-off switch 33 is switched off due to the operation of the operation handle 4. An indication apparatus 48 such as an LED for showing that delay motion is running may be provided on the circuit board 44 of the operation handle 4. Furthermore, a function selection switch 49 may be provided on the circuit board 44, because there can be the case that the timer function or the delay function is not used.

### (Second Modified Example of the First Embodiment)

In a load control switch 1 of a second modified example shown in FIG. 3, a motion sensor 61 and an illumination sensor 62 are further established in an inside of an operation handle 4. A function selection switch 49 serves as a switch for selecting whether an automatic control of turning on and off of a load by the motion sensor 61 is used or not, and a volume 46 is used as a time setting volume for keeping the turning on state of the load. When the motion sensor 61 detects existence of a human body in a predetermined area and it is detected equal to or less than a predetermined brightness by the illumination sensor, a lighting installation as the load is turned on in a predetermined time period.

### (Third Modified Example of the First Embodiment)

In a load control switch 1 of a third modified example shown in FIG. 4, a plug outlet 38 is provided on the switching function module 3, and it is constituted that the plug outlet 38 becomes available when the operation handle 4 is detached or rotated more than 90 degrees in a predetermined direction. Although it is limited to a case that the terminal module 2 is in the three wire system, an electric power supply can be secured from the load control switch 1 in case of emergency.

### (Fourth Modified Example of the First Embodiment)

A load control switch 1 of a fourth modified example shown in FIG. 5, is constituted that antennas 63 and 64 are further mounted on the circuit board 44 and the external electronic circuit 45 is consisted by a radio signal reception circuit 45a, in the above first modified example. Driving electric power of the radio signal reception circuit 45a is supplied from the electronic switch (the switching function module 3) through the first contacts 37 and the second contacts 47.
In FIG. 5, a mode that three first contacts 37 are provided is exemplified and a number of the second contacts 47 is the same as that of the first contacts 37.

It is constituted that the antennas 63 and 64 are arranged so that substantially the same elements are arranged to be approximately perpendicular to each other and only one of them is selected to be used. As is generally known, since electric waves transmitted from a wireless remote control device (not illustrated) include transverse electric component and transverse magnetic component, one of the antennas 63 and 64 which has a splendid signal reception condition can be selected corresponding to surrounding radio wave environment. Selection of the antenna 63 or 64 may be changed by switching of a user, or it may be an automatic change by the radio signal reception circuit 45a.

For example, when a lighting installation such as an incandescent lamp or LEDs is connected as a load, it is effective to provide a light control function into the load control switch. In such a case, it may be constituted that a light control circuit is further provided in a control circuit 36 of the electronic switch, and a light control signal is received by a radio signal reception circuit 45a, and the light control circuit performs light control of the lighting installation as the load corresponding to the light control signal.

In this modified example, it is assumed that the most popular priced mechanical switch was attached as the switching function module 3 when entering into a new residence. In such a case, when a user wishes to control turning on and off of the lighting installation from a wireless remote control device, he/she may purchase a switching function module 3 with an electronic switch, an operation handle 4 with a radio signal receiving function and a wireless remote control device, and replace them by oneself. Thereby, it will be no need to ask an electric engineering firm, for example, for the wiring works, and thus, it is possible to improve or to change the function of the load control switch with low cost at any optional time.

### (Fifth Modified Example of the First Embodiment)

A load control switch 1 of a fifth modified example shown in FIG. 6 is constituted that a driving electric power is supplied from a primary battery 65 built in the operation handle 4 to the radio signal reception circuit 45a, in the above fourth modified example. In addition, the first contacts 37 and the second contacts 47 are respectively provided at least two each. For example, in the case of a two wire system, a load control switch 1 is connected in series for a commercial electric power supply and a load. Then, a driving electric power of a control circuit 36 of a switching function module 3 of the load control switch 1 is supplied from the commercial electric power supply. In other words, even in a state that the load is turned off, a standby power requirement is consumed for standing ready a CPU of the control circuit 36 or the like, and a minute electric current flows in the load due to it. Similarly, a radio signal reception circuit 45a waits to be able to receive a control signal from a wireless remote control device, even when the load is turned off state. Hereupon, if the driving electric power of the radio signal reception circuit 45a is supplied from the witching function module 3 similar to the fourth modified example shown in FIG. 5, an electric current flowing into the load increases in the state that the load is switched off. It does not the matter if the load is the incandescence light, but when the load such as the LEDs of low electric power consumption and having characteristics that value of electric current reduces corresponding to the increase of voltage of the commercial electric power supply, there is a possibility that the LEDs may be lit by the electric current due to the standby power requirement of the control circuit 36. Therefore, it is possible to prevent false lighting of the LEDs by supplying the driving electric power of the radio signal reception circuit 45a from a built-in primary battery 65, like the fifth modified example shown in FIG. 6. Besides, if using a lithium ion battery as for the primary battery 65, battery life of 3-5 years is secured (it depends on use frequency), so that there is no problem in practical use. In addition, it may be constituted that a warning is outputted to urge the battery exchange when there is little battery life.

### (Sixth Modified Example of the First Embodiment)

A load control switch 1 of a sixth modified example shown in FIG. 7 comprises an electric generation element 66 such as a solar cell and a secondary battery 67 into which electric power generated by the electric generation elements 66 is charged in an operation handle 4, in the above fourth modified example. It is constituted that driving electric power is supplied from the electric generation element 66 or the secondary battery 67 to a radio signal reception circuit 45a. As for the electric generation element 66, a piezoelectric elements can be used other than the solar cell. For example, the operation handle 4 is pressed in a constant direction by a spring of a push-on / push-off switch 33. Therefore, it is possible to generate an electric power of about the driving electric power of the radio signal reception circuit 45a if a piezoelectric element is provided on a rear face 41 of the operation handle 4 and a pressure is added to the piezoelectric element regularly. In addition, since the operation handle 4 comprises the electric generation element 66, the operation handle 44 needs no terminals for receiving electric power, and needs no electric power supply from the switching function module 3, so that circuit constitution can be simplified. Furthermore, a user becomes freedom from maintenance such as battery exchange of the operation handle by using the electric generation element 66.

### (Seventh Modified Example of the First Embodiment)

A load control switch 1 of a seventh modified example shown in FIG. 8 is constituted that an operation handle 4 is approximately square in a front view, and attachable in two directions perpendicular to each other with respect to a mounting surface 32 of a switching function module 3, in the above fourth modified example. Since only one antenna 63 is mounted on a circuit board 44, it is possible to set the signal receiving direction of the antenna 63 in the most suitable direction by changing the attaching direction of the operation handle 4 for the switching function module 3. Two sets of bearing 42A and 42B and second contacts 47A and 27B respectively arranged that directions of them are to be perpendicular to each other are provided on a rear face of the operation handle 4. In such a case, first contacts 37A of the switching function module 3 are formed as spring pieces. By shaping the operation handle 4 as a square, although a number of the load control switches which can be mounted on an installation frame is limited to one or two, it enables to reduce a number of antennas to be one and to simplify a constitution of a radio signal reception circuit 45a and to reduce the cost.

### (Eighth Modified Example of the First Embodiment)

A load control switch system "A" in accordance with an eighth modified example shown in FIG. 9 comprises a wireless remote control device 7 as well as a load control switch 1. As for the load control switch 1 of the eighth modified example, the radio signal reception circuit 45a (see FIG. 5) in the load control switch of the above fourth modified example is replaced with a radio signal transmission and reception circuit 45b, and a control circuit 68 is further mounted on a circuit board 44. A control circuit 36 of an electronic switch and the radio signal transmission and reception circuit 45b and the control circuit 68 are connected through first contacts 37 and second contacts 47. Driving electric power of the radio signal transmission and reception circuit 45b is supplied from the electronic switch (the switching function module 3 side) through the first contacts 37 and the second contacts 47. According to such a constitution, since the operation handle 4 is driven by the electric power supplied from the electronic switch module, it needs no maintenance such as battery exchange of the operation handle 4.

The wireless remote control device 7 is used to perform the remote control of switching or light intensity of the load control switch 1 by performing radio communication between the radio signal transmission and reception circuit 45b of the operation handle 4 and it. The wireless remote control device 7 may be a light-weighted form enabling to be carried on or may be a fixed form on a wall so as not to be carried on.

The wireless remote control device 7 comprises an operation button unit 71, a control unit (a control signal output unit) 72, a signal transmission and reception unit 73 and an indication unit (a load control state informing unit) 74. The operation button unit 71 consists of plural button units which receive input operations of the load control switch 1 which a user demands, and includes an on/off button of the load control switch 1 and a brightness adjustment button, for example. The control unit 72 comprises a CPU, and generates a control signal which is to be transmitted to the load control switch 1 depending on the operation button unit 71, and outputs it to the signal transmission and reception unit 73. In addition, the control unit 72 performs indication control of the indication unit 74 corresponding to the signal transmitted to and signal received from the load control switch 1. The signal transmission and reception unit 73 receives a command from the control unit 72 and performs transmitting and receiving a control signal between the load control switch 1 and it. The indication unit 74 is a liquid crystal display unit or an LED (light emitting diode) to inform communication state with the load control switch 1 to the user, or a buzzer for generating warning sound, or the like. For example, when no reply signal returns from the load control switch 1 after transmitting the control signal from the wireless remote control device 7 to the load control switch 1, a warning indication such as "communication with lighting installation is impossible" is displayed on the indication unit 74 of the wireless remote control device 7.

Subsequently, it will be described relating to a motion of the load control switch system "A" in accordance with this embodiment. As shown in FIG. 10, when an instruction input such as lighting or extinction of the lighting installation is performed through the operation button unit 71 of the wireless remote control device 7, first (S21), the control unit 72 generates a control signal corresponding to a kind of the operation button unit 71 and outputs it to the signal transmission and reception unit 73 (S22). Then, the signal transmission and reception unit 73 transmits the control signal to the radio signal transmission and reception circuit 45b of the operation handle 4 (S23).

Subsequently, the control circuit 68 of the operation handle 4 acquires the control signal through the radio signal transmission and reception circuit 45b which received the control signal (S24). In addition, the control circuit 6 (SIC: 68) performs a command signal corresponding to the control signal acquired to the control circuit 36 of the switching function module 3 (S25), and performs a reply command of a reply signal which shows confirmation of reception of the control signal (S26). Then, the radio signal transmission and reception circuit 45b transmits the reply signal to the wireless remote control device 7 (S27), and the signal transmission and reception unit 73 of the wireless remote control device 7 receives the reply signal (S28). Subsequently, the control unit 72 which received the reply signal indicates a fact that the command input performed with the operation button unit has been completed on the indication unit 74 (S29).

As shown in FIG. 11, the control unit 72 of the wireless remote control device 7 retransmits the control signal (S32), when no reply signal from the load control switch 1 had been received within a predetermined time period (S31) after transmitting the control signal to the load control switch 1 (S23). Thereby, communication reliability between the wireless remote control device 7 and the load control switch 1 can be increased much more.

In addition, the control unit 72 of the wireless remote control device 7 indicates "communication with lighting installation is impossible" on the indication unit 74 (S35), when no reply signal had been received (S33, S34) after retransmitting the control signal (S32). As for this, there is a case that no reply signal had been received from all the load control switches 1, even when a user performs input operation to extinction of all the plural lighting installations with using the operation button unit 71 of the wireless remote control device 7. In such a case, the user can know surely that all the lighting installations are not extinguished by indicating the fact that the lighting installations corresponding to a part of the load control switches 1 are not extinguished on the indication unit 74.

In addition, as shown in FIG. 12, the wireless remote control device 7 may retransmit the control signal to a desired load control switch 1 in the retransmission of the control signal described in the above S32 with using another load control switch 1 or another wireless remote control device 7 existing in the load control switch system "A" as a transponder. As for this, when the first transmission of the control signal was impossible, it is highly possible that retransmission of the control signal will be impossible with using the same wireless remote control device 7. Communication reliability between the wireless remote control devices 7 and the load control switch 1 is increased by commissioning the relay of the second transmission of the control signal to another load control switch 1 or another wireless remote control device 7 in the load control switch system "A". In addition, in this case, a command showing commission of relay and information of forwarding address of the load control switch 1 and so on are included in a header portion of the control signal. In addition, besides FIG. 12, there is a method that the wireless remote control device 7 broadcasts the relay of the control signal to other load control switches 1 and other wireless remote control devices 7 in the load control switch system "A" extends.

In addition, for enabling the user to confirm the turning on/off state of the lighting installation at the present moment surely, the control circuit 36 of the switching function module 3 generates a load control state signal at a regular interval (for example, several seconds) and transmits it to the control circuit 68 of the operation handle 4 (S51), as shown in FIG. 13. Then, the control circuit 68 of the operation handle 4 transmits the load control state signal to the wireless remote control device 7 through the radio signal transmission and reception circuit 45b (S52, 53). The control unit 72 of the wireless remote control device 7 indicates the turning on/off state of the lighting installation in the indication unit 74 based on the load control state signal which is received (S54, 55). Thereby, the user can confirm the turning on/off state of the lighting installation at the present moment in the indication unit 74 of the wireless remote control device 7, even when plural wireless remote control devices 7 exist or plural load control switches 1 are connected to one lighting installation using three-way switches or four-way switches.

In this modified example, in order to replace the load control switch 1, it will be no need to ask an electric engineering firm, for example, for the wiring works, and thus, it is possible to improve or to change the function of the load control switch with low cost at any optional time, similar to the above fourth modified example.

In addition, when a load control switch 1 is operated from the wireless remote control device 7, the communication state is indicated in the indication unit 74 by receiving a reply signal replied from the load control switch 1. Therefore, communication reliability between the wireless remote control device 7 and the load control switch 1 is improved and the user can confirm turning on/off of the lighting installation through the indication unit 74.

### (Ninth Modified Example of the First Embodiment)

A load control switch 1 of a ninth modified example shown in FIG. 14 is constituted that driving electric power is supplied to a radio signal transmission and reception circuit 45b and a control circuit 68 from a primary battery 65 built in an operation handle 4, in the above eighth modified example. In addition, first contacts 37 and second contacts 47 are to be at least two each. The radio signal transmission and reception circuit 45b or the control circuit 68 always waits to receive a control signal from a wireless remote control device 7, even when a load is in a turned off state. A constitution to supply the electric power to the radio signal transmission and reception circuit 45b and the control circuit 68 in this modified example is similar to the constitution to supply the electric power to the radio signal transmission and reception circuit 45a and the control circuit 68 in the above fifth modified example. In addition, connection constitution of the load control switch 1 to the commercial power supply and the load and electric power feeding constitution to the control circuit 36 are equivalent to those in the above fifth modified example. Therefore, the load control switch 1 of this modified example has substantially the same as that of the above fifth modified example.

In addition, the wireless remote control device 7 comprises a built-in primary battery 75 and using the primary battery 75 as an electric power supply to drive each processing section such as the control unit 72, so that the wireless remote control device 7 can be light-weighted and enables to improve convenience of the user. Besides, in the wireless remote control device 7 of a type fixed on a wall, it may have an electric power reception circuit to receive the electric power from the commercial electric power supply.

### (Tenth Modified Example of the First Embodiment)

A load control switch 1 of a tenth modified example shown in FIG. 15 comprises an electric generation element 66 such as a solar cell and a secondary battery 67 into which electric power generated by the electric generation elements 66 is charged in an operation handle 4, in the above eighth modified example. It is constituted that driving electric power is supplied from the electric generation element 66 or the secondary battery 67 to the radio signal reception circuit 45b and the control circuit 68. A constitution to supply the electric power to the radio signal transmission and reception circuit 45b and the control circuit 68 in this modified example is similar to the constitution to supply the electric power to the radio signal transmission and reception circuit 45a and the control circuit 68 in the above sixth modified example, so that substantially the same effect as that of the above fifth modified example can be obtained.

### (Eleventh Modified Example of the First Embodiment)

As load control switch system "A" in accordance with an eleventh modified example shown in FIG. 16 comprises plural (a case of two is exemplified) wireless remote control devices 7, and each of the wireless remote control devices 7 has an information unit 76, in the above eighth modified example. The information unit 76 is a moving unit to inform a location of the wireless remote control device 7 to a user, and it may be a buzzer, an LED (light emitting diode) or a vibrator.

The control unit 72 controls information motion in the information unit 76 corresponding to a signal transmitted to or a signal received from the load control switch 1. The information unit 76 receives an instruction signal from the control unit 72 and starts a motion such as warning sound from the buzzer, lighting or flickering of the LED or vibrator function. In this way, the information unit 76 informs the location of the wireless remote control device 7 to the user via sense of vision or sense of hearing of the user.

Subsequently, it will be described relating to the motion of the load control switch system "A" in accordance with this embodiment. As shown in FIG. 17, when a user lost desired wireless remote control device 7B, a "button for search" provided in the operation button unit 71 of another wireless remote control device 7A is pushed down, for example. Then, the control unit 72 transmits a control signal for search of the wireless remote control device 7B to the operation handle 4.

Subsequently, the control circuit 68 of the operation handle 4 acquires the control signal through the radio signal transmission and reception circuit 45b and generates a reply signal for starting the motion of the information unit 76 of the wireless remote control device 7 each in the load control switch system "A". Then, the radio signal transmission and reception circuit 45b transmits the reply signal to the plural wireless remote control devices 7 in an area in load control switch system "A" where electric waves can reach. Subsequently, the control unit 72 of the wireless remote control device 7B which received this reply signal starts the information motion of the information unit 76. Therefore, the user can find lost wireless remote control device 7B easily by using one of the plural wireless remote control devices 7 in the load control switch system "A".

Besides, a "switch for search 40" provided on the operation handle 4 of the load control switch 1 can be used without transmitting the control signal from the wireless remote control device 7, as shown in FIG. 18. When the user pushes down this "switch for search 40", a reply signal for letting to start the motions of the information units 76 to the plural wireless remote control devices 7 in the load control switch system "A" is transmitted from the load control switch 1 at once. Therefore, the user can find the lost wireless remote control device 7 easily.

In this modified example, in order to replace the load control switch 1, it will be no need to ask an electric engineering firm, for example, for the wiring works, and thus, it is possible to improve or to change the function of the load control switch with low cost at any optional time, similar to the above eighth modified example.

In addition, it is assumed that a user who lost desired wireless remote control device 7 among the plural wireless remote control devices 7 in the load control switch system "A" operates the load control switch 1 with using another wireless remote control device 7. In such a case, the wireless remote control device 7 which received the reply signal replied from the load control switch 1 starts the information motion of the information unit 76. Thereby, the user can find the lost wireless remote control device 7 easily with using another wireless remote control device 7.

### (Twelfth Modified Example of the First Embodiment)

A load control switch 1 in a twelfth modified example shown in FIG. 19 is constituted that driving electric power is supplied to a radio signal transmission and reception circuit 45b and a control circuit 68 from a primary battery 65 built in an operation handle 4, in the above eleventh modified example. In addition, first contacts 37 and second contacts 47 are to be at least two each. The radio signal transmission and reception circuit 45b or the control circuit 68 always waits to receive a control signal from a wireless remote control device 7, even when a load is in a turned off state. A constitution to supply the electric power to the radio signal transmission and reception circuit 45b and the control circuit 68 in this modified example is similar to the constitution to supply the electric power to the radio signal transmission and reception circuit 45a and the control circuit 68 in the above fifth modified example. In addition, connection constitution of the load control switch 1 to the commercial power supply and the load and electric power feeding constitution to the control circuit 36 are equivalent to those in the above fifth modified example. Therefore, the load control switch 1 of this modified example has substantially the same as that of the above fifth modified example.

In addition, the wireless remote control device 7 has a constitution to drive each processing section such as the control unit 72, by the built-in primary battery 75. The driving mode of each processing section is the same as that of the wireless remote control device 7 in the above ninth modified example, so that it has substantially the same effect as that in the ninth modified example. Besides, in the wireless remote control device 7 of a type fixed on a wall, it may have an electric power reception circuit to receive the electric power from the commercial electric power supply.

### (Thirteenth Modified Example of the First Embodiment)

A load control switch 1 of a thirteenth modified example shown in FIG. 20 comprises an electric generation element 66 such as a solar cell and a secondary battery 67 into which electric power generated by the electric generation elements 66 is charged in an operation handle 4, in the above eighth modified example. It is constituted that driving electric power is supplied from the electric generation element 66 or the secondary battery 67 to a radio signal reception circuit 45b and a control circuit 68. A constitution to supply the electric power to the radio signal transmission and reception circuit 45b and the control circuit 68 in this modified example is similar to the constitution to supply the electric power to the radio signal transmission and reception circuit 45a and the control circuit 68 in the above sixth modified example, so that substantially the same effect as that of the above fifth modified example can be obtained.

### (Fourteenth Modified Example of the First Embodiment)

FIG. 21 shows a constitution of a load control switch system "A" in accordance with a fourteenth modified example. In the load control switch system "A" in accordance with this modified example, an operation handle 4 comprises an information unit 4a for informing battery running out in a wireless remote control device 7 or battery running out in the operation handle 4 to a user. In addition, the operation handle 4 comprises a battery running out detection circuit 4b which measures a value of voltage and detects the battery running out of the primary battery 65 built in the operation handle 4. In addition, the wireless remote control device 7 comprises a battery running out detection unit 77 which measures a value of voltage and detects the battery running out of a primary battery 75.

Subsequently, various kinds of motions of the load control switch system "A" of this modified example is described referring to FIG. 22 and FIG. 23 as well as FIG. 21. As shown in FIG. 22, when the battery running out is detected in the battery running out detection unit 77 of the wireless remote control device 7, a control unit 72 transmits a motion signal for letting to start a motion of the information unit 4a of the operation handle 4 to a radio signal transmission and reception circuit 45b. A control circuit 68 which received the motion signal indicates the battery running out of the wireless remote control device 7 in an information unit 4a to a user. Besides, the information unit 4a may be a mode to inform by warning sound other than display indication shown in FIG. 21.

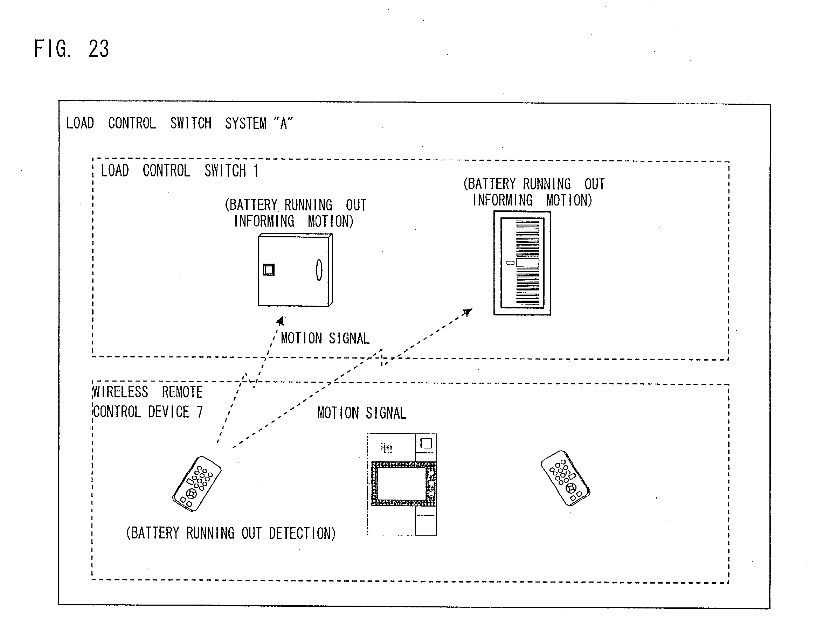

On the other hand, as shown in FIG. 23, when the battery running out is detected in the battery running out detection circuit 4b of the operation handle 4, the control circuit 68 transmits a motion signal for letting to start a motion of an information unit 76 to the wireless remote control device 7. The control unit 72 which received the motion signal makes the information region 76 start a motion to inform the battery running out of the built-in primary battery 65 of the operation handle 4 to the user. By such a constitution, the user can know batter running out of the primary battery 75 in the wireless remote control device 7 or batter running out of the primary battery 65 in the operation handle 4 surely.

### (Second Embodiment)

A load control switch system in accordance with a second embodiment of the present invention is described. FIG. 24 is a drawing showing a constitution of load control switches included in the load control switch system in accordance with this embodiment. In this drawing, members of the same constitutions as those in the above first embodiment are referred the same marks. Basically, one load control switch 1 consists of one switch module and one operation handle. However, in the load control switch system "A" of this embodiment, plural switch modules and a single operation handle constitute plural load control switches corresponding to plural loads (such as illumination installations), simultaneously. FIG. 24 shows a state that plural (for example, three) electronic switch modules 8 are directly mounted on an installation frame 9 established on a wall surface of a building in a manner to be arranged in a vertical direction, and a single operation handle 4 is attached to the plural electronic switch modules 8.

A terminal base 81 to which electric wires 5 are connected is provided on a rear face 8a of the electronic switch module 8 each. The terminal base 81 further comprises inlets 21 into which core wires 51 of the electric wires 5 that insulation coatings are peeled off are inserted, and they are constituted to be automatically locked when the core wires 51 of the electric wires 5 are inserted (similar to those in the conventional load control switch). In addition, as for the terminal base 81, one in a two wire system is exemplified in FIG. 24, it may be one in a three wire system. Since the electronic switch modules 8 are installed by a person having specialist knowledge such as a registered electrician, according to the constitution of this embodiment, when the terminal module 2 (SIC: electronic switch module 8) is installed once, it is not replaced, usually.

The electronic switch module 8 is an electronic switch using a semiconductor switch element as a main switch element, and a push-on / push-off switch 33 operated by the operation handle 4 is provided on a mounting surface 8b to which the operation handle 4 is attached. In addition, first contacts 37, through which a control signal outputted from a radio signal reception circuit which will be mention later is inputted, are provided on the mounting surface 8b of the electronic switch module 8. The first contacts 37 constitute external signal input terminals. A circuit board 35 is provided in an inside of the electronic switch module 8, and a control circuit 36 which is constituted by a semiconductor switch element such as a triac and controls conduction and non-conduction of the main switch is mounted on the circuit board 35. When the operation handle 4 is operated by a user, and thereby, the push-on / push-off switch 33 is switched on or off, alternatively a control signal is inputted from the first contacts 37, the load is turned on or off thereby.

Only one operation handle 4 is used for plural (for example, three) electronic switch modules 8. The operation handle 4 has a bracing shaft 11 formed perpendicularly along an arrangement of the electronic switch modules 8 in a state that it is attached to the plural electronic switch modules 8. In addition, the operation handle 4 has plural (for example, three) movable sections 12A to 12C which are formed in a shape of a cantilever to project from the bracing shaft 11 in a direction perpendicular to a center axis of the bracing shaft 11 each. The bracing shaft 11 is fit to fitting projections 91 which are formed on the installation frame 9, for example, so that it is fixed thereon. The operation handle 4 is formed by resin molding, for example, coupling portions of the bracing shaft 11 and the movable sections 12A to 12C are formed to have a wall thickness thinner than that of the other portions, for example. Thereby, each movable section 12A to 12C can be deformed (bent) independently from other movable sections, so that the push-on / push-off switch 33 of each electronic switch module 8 can be operated individually. In addition, the constitution, which enables each movable section 12A to 12C to be deformed (bent) independently, is not limited to this, so that it may be another constitution such as hinges. Besides, the operation handle 4 is fixed so that the bracing shaft 11 is fit to the fitting projections 91 of the installation frame 9 and attached to the electronic switch modules 8 which are mounted on the installation frame 9, indirectly. However, it may be constituted that either of or all of the movable sections 12A to 12C of the operation handle 4 is/are directly attached to the mounting surface/surfaces 8b of electronic switch module/modules 8, directly.

As is generally known, size of the operation handle is decided by a number of the electronic switch module 8 mounted on an installation frame. For example, when only one electronic switch module 8 is mounted on an installation frame 9, an operation handle 4 called "single" having substantially the same size as that of a rectangular opening formed on a decorative plate is used. Alternatively, when two electronic switch modules 8 are mounted on the same installation frame 9, operation handles 4 called "double" each having a 1/2 size of a dimension in height direction of the rectangular opening formed on the decorative plate are used (dimensions in widthwise direction are the same). Furthermore, when three electronic switch modules 8 are mounted on the same installation frame 9, operation handles 4 called "triple" each having a 1/3 size of a dimension in height direction of the rectangular opening formed on the decorative plate are used. In this embodiment, the size of the movable section 12A to 12C of the operation handle 4 is formed to be approximately 1/2 or approximately 1/3 of a dimension in a height of the rectangular opening formed on the decorative plate. As well as the conventional case, it is needless to say that it can be selected among plural colors and designs.

A radio signal reception circuit 45a and an antenna 64 are mounted in an inside of a movable section (for example, 12B). In addition, a projection 43 to push the push-on / push-off switch 33 is formed on the rear face of each movable section 12A to 12C, that is, a rear face 41 facing a mounting surface 8b of the electronic switch module 8. In addition, second contacts 47, which are to be connected to the first contacts 37 of the electronic switch module 8, are provided on the rear face 41. The second contacts 47 constitute output terminals. In addition, the radio signal reception circuit 45a is connected to respective second terminals 47 through signal lines 47a, and thereby, the radio signal reception circuit 45a and the control circuit 36 of the electronic switch module 8 is connected.

As is generally known, since electric waves transmitted from a wireless remote control device (not illustrated) include transverse electric component and transverse magnetic component, there may be a case that one component is splendid than the other component in signal reception sensitivity due to surrounding radio wave environment. Although only one antenna 64 is illustrated in FIG. 24, it may be constituted that two antennas are arranges so that signal receiving directions of them are to be perpendicular to each other, and one antenna having a splendid signal reception condition is selected. Selection of the antenna may be changed by switching of a user, and it may be an automatic changed by the radio signal reception circuit 45a.

In addition, in the embodiment shown in FIG. 24, driving electric power of the radio signal reception circuit 45a is not limited in particular, so that it is possible to provide a primary battery in an inside of the operation handle 4 and to supply the driving electric power from the primary battery. In addition, it is possible to provide a solar cell on a decoration face of the operation handle 4 and to supply the driving electric power from the solar cell. Alternatively, it is possible to provide contacts other than the first contacts 37 and the second contacts 47 and to supply the driving electric power from the electronic switch module 8 to the operation handle 4 side.

Furthermore, when a lighting installation such as an incandescent lamp or LEDs is connected as load, it is effective to provide a light control function to the load control switch. In such a case, it may be constituted that a light control circuit is further provided in the control circuit 36 of the electronic switch, a light control signal transmitted from a wireless remote control device is received by the radio signal reception circuit 45a and the light control circuit performs light control of a lighting installation as a load corresponding to the light control signal. The wireless remote control device (not illustrated) should possess operation buttons to control lighting (on) and extinction (off) of at least a specific lighting installation or all lighting installations, and constitution and arrangement of them are not limited in particular. Furthermore, it may possess the above light control button for light controlling.

In this embodiment, a user can replace the load control switch by oneself by purchasing a switching function module 3 (SIC) meeting the purpose and an applicable operation handle 4 in the DIY store or the like. For example, it is assumed that an operation handle having no electronic function is attached when entering into a new residence, if the user wishes to use a light control function of a lighting installation, he/she may purchase an operation handle 4 and a wireless remote control device, and replace the operation handle 4 by oneself. Thereby, wiring works for replacing works is not needed , so that it will be no need to ask an electric engineering firm, for example, for the wiring works, and thus, it is possible to improve or to change the function of the load control switch with low cost at any optional time.

In addition, when a control signal transmitted from the wireless remote control device is received by a single radio signal reception circuit 45a, the control signal may be inputted into either of or all of the plural electron switch modules 8 corresponding to the contents of the received control signal. Therefore, it is possible to control turning on and off of plural loads (lighting installations) individually or simultaneously by a single wireless remote control device and a single radio signal reception circuit 45a.

Although a mode that a plurality of the same kind of the electronic switch modules 8 are mounted on a single installation frame 9 and a kind of the operation handle is attached thereon is exemplified in FIG. 24, the load control switch system "A" comprises plural kinds of switch modules having different functions each other. In addition, the load control switch system "A" comprises plural kinds of operation handles which are to be detachably attached to plural kinds of the switch modules. Then, a load control switch is constituted by attaching one operation handle selected among the plural kinds of operation handles to one switch module selected among the plural kinds of switch modules.

Modified examples of the load control switch system "A" of this embodiment will be described below. Equivalent constitutions and effects among the above embodiment and modified examples or among the modified examples are omitted.

### (First Modified Example of the Second Embodiment)

FIG. 25 is a drawing showing a constitution of a load control switch 1 in a first modified example. In this modified example, an operation handle 4 is a form of a board body which covers the whole arrangement of plural electronic switch modules 8 in a state that it is attached to the plural electronic switch modules 8. Then, slits 14 are formed to be able to deform movable sections 13A to 13C facing push-on / push-off switches 33 of the plural electronic switch modules 8 independently each. A radio signal reception circuit 45a, second contacts 47 and signal lines 47a are provided to avoid the movable sections 13A to 13C, and thereby, the signal lines 47 are not flexed so that defectiveness due to breakage of the signal lines 47a is prevented.

### (Second Modified Example of the Second Embodiment)

FIG. 26 is a drawing showing a constitution of an electronic switch module 8 in the second modified example. In this modified example, the electronic switch module 8 is constituted by a terminal module 2 to which electric wires 5 are connected, and a switching function module 3 which is detachably attached to the terminal module 2 and has at least a switching function to control turning on and off of a load. In this way, since the electronic switch module 8 is divided into the terminal module 2 and the switching function module 3, a user can replace a function of a switch module without accompanying electrical works. Constitutions of the terminal module 2 and the switching function module 3 in this modified example are respectively equivalent to the terminal module 2 and the switching function module 3 except the bracing shaft 34 in the above second modified example of the first embodiment (see FIG. 2).

In this embodiment, even when the terminal module 2 is installed beforehand, a user can replace the load control switch by one self by purchasing a switching function module 3 meeting the purpose and an applicable operation handle 4 in the DIY store or the like.
For example, it is assumed that the most popular priced mechanical switch was attached as the switching function module when entering into a new residence. In such a case, if the user wishes to control on and off of a lighting installation from a wireless remote control device, he/she may purchase a switching function module 3 with electronic switch, an operation handle 4 having radio signal receiving function and a wireless remote control device, and replace the switching function module 3 and the operation handle 4 by oneself. Thereby, it is possible to improve or to change the function of the load control switch with low cost at any optional time.

Besides, the load control switch system in accordance with this modified example is constituted by a terminal module 2 in a two wire system or in a three wire system, for example, plural kinds of switching function modules 3 exemplified in the above embodiment and plural kinds of operation handles 4 applicable, and so on.

### (Third Modified Example of the Second Embodiment)

FIG. 27 is a drawing showing a constitution of a load control switch 1 in a third modified example. In this modified example, plural (for example, three) electronic switch modules 8, 8A, 8B of different kinds are mounted on an installation frame 6 (SIC: 9) in a manner to be arranged in a vertical direction. Furthermore, different operation handles 4, 4A, 4B are attached to the electronic switch modules 8, 8A, 8B, respectively. Hereupon, central electronic switch module 8 has a delay function, and central operation handle 4 is an operation handle corresponding to the electronic switch module 8 having the delay function. Hereupon, the central electronic switch module 8 and the operation handle thereof are explained mainly.

The electronic switch module 8 is an electronic switch using a semiconductor switch element as a main switch element, and a bracing shaft 34, which is fit to a bearing 42 provided on a rear face 41 of the operation handle 4, is provided on a mounting surface 8b to which the operation handle 4 is attached. A projection 43, which contacts the push-on / push-off switch 33 in a state that the operation handle 4 is attached to the electronic switch module 8, is provided on the rear face 41 of the operation handle 4. The operation handle 4 is formed asymmetry with respect to the bracing shaft 34 (or the bearing 42), and it is held in one-sided by a spring of the push-on / push-off switch 33, generally.

A circuit board 35 is provided in an inside of the electronic switch module 8, an electric power supply circuit (not illustrated), a load control circuit 36a and a delay circuit 36b are mounted on the circuit board 35, other than a main switch element. The load control circuit 36a and the delay circuit 3b are constituted by a CPU and so on, for example. The load control circuit 36a functions as a subordinate (SIC) control circuit for controlling conduction and non-conduction of semiconductor switch element such as a triac. In addition, the delay circuit 36 turns off the load after passing a predetermined time period after the push-on / push-off switch 33 is pushed off. A delay function selection switch 82 for letting the delay function of the delay circuit 36b effective and for setting a delay time is provided on a mounting surface 8b of the electronic switch module 8. In other words, as long as the delay function selection switch 82 is not switched on, the delay function of the delay circuit 36b is unavailable.

An L-shaped groove 4c is formed on a rear face 41 of the operation handle 4, for example, and a displacement member 4d is fit into the groove 4c. When a longer side of the L-shaped groove 4c (horizontal direction) is defined as a first direction and a shorter side (vertical direction) is defined as a second direction, the displacement member 4d slides in the groove 4c along the first direction and the second direction. In addition, the displacement member 4d has a projection 4e (a second projection) which is projected outward from the rear face 41. On the other hand, the delay function selection switch 82 has a contact face of a rectangle that a length in the first direction (horizontal direction) is longer than a length in the second direction (vertical direction). In a state that the operation handle 4 is attached to the electronic switch module 8, the longer side of the L-shaped groove 4c approximately overlaps the contact face of the delay function selection switch 82. When the displacement member 4d is located somewhere in the longer side of the L-shaped groove 4c, the projection 4e of the displacement member 4d contacts the delay function selection switch 82. The position at somewhere on the longer side of the L-shaped groove 4c is defined as a first position 4f of the displacement member 4d. When the displacement member 4d is slid upward in the shorter side of the L-shaped groove 4c, the projection 4e of the displacement member 4d does not contact the delay function selection switch 82. The upward position on the shorter side is defined as a second position 4g of the displacement member 4d. In addition, although it is not illustrated, click stop structures each consists of V-shaped reentrants and a V-shaped elastic protrusion, for example, is formed on the longer side and shorter side of the L-shaped groove 4c and the displacement member 4d so as to stop the displacement member 4d at predetermined positions including the above second position. In addition, a reentrant 8c which enables not to contact the projection 4e of the displacement member 4d is formed at a portion on the mounting surface 8b of the electronic switch module 8 facing the above second position 4g.

Although, the electronic switch module 8A at the top position in FIG. 27 has no delay circuit, first contacts 37 (external signal input terminals) are provided on a mounting surface 8b thereof. Control signals from various kinds of sensors such as a motion sensor or an illumination sensor, or external electronic circuits such as a timer circuit or a radio communication circuit are inputted into the first contacts 37. In addition, the above external electronic circuit 45 and second contacts 47 (signal output terminals) are provided on an operation handle 4A at the top position. When this operation handle 4A is attached to the electronic switch module 8A, the load control switch 1 becomes a functional switch comprising a sensor function, a timer (on time and off time reservation) function or a wireless communication function. In addition, an electronic switch module 8B at the bottom position in FIG. 27 is the simplest load control switch having no delay circuit and no first contacts, and an operation handle 4B thereof is the simplest operation handle having no displacement member and no external electronic circuit. In this embodiment, as well as the conventional case, it is needless to say that it can be selected among plural colors and designs for the operation handles 4, 4A, 4B.

Since the delay function selection switch 82 serves as a delay time setting switch in this modified example substantially, the conventional volume for delay time adjusting becomes needless, and miniaturization of housing thereof is enabled. Consequently, plural electronic switch modules 8 each having delay function can be mounted on a single installation frame 6 (SIC: 9). Alternatively, many electronic switch modules 8A, 8B can be installed on the same installation frame 6 (SIC: 9) with the electronic switch module 8 having the delay function, as shown in FIG. 27. Furthermore, price reduction of the load control switch 1 due to reduction of parts cost is enabled.

FIG. 28(a) shows a constitution example of the delay function selection switch 82. In addition, FIG. 28 (b) shows a state that the projection 4e of the displacement member 4d (see FIG. 27) contacts the contact face of the delay function selection switch 82. The delay function selection switch 82 is configured to have plural electrodes 83 arranged in the first direction, and a pressure-sensitive conductive rubber 84 having a rectangle contact face that a longer side thereof corresponds to the first direction and covering whole of the arranged plural electrodes 83. As mentioned above, the displacement member 4d is able to slide in the first direction along the groove 4c, and stops at an optional first position 4f by the click stop structure. When the operation handle 4 is operated by a user; the push-on / push-off switch 33 is pushed on or off thereby and the projection 4e of the displacement member 4d contacts the contact face 84a of the pressure-sensitive conductive rubber 84, so that the pressure-sensitive conductive rubber 84 is pressed and deformed. When a pressure is applied to the pressure-sensitive conductive rubber 84, a pressurized portion is conducted. For example, it is assumed that adjoining two electrodes are alternately biased + and -, different electrodes or combination of different electrodes are conducted corresponding to the contact position on the contact face of the pressure-sensitive conductive rubber 84. The delay circuit 36b sets a delay time corresponding to which electrodes or which combination of the electrodes are conducted, and performs a delay motion. In addition, in the case that the displacement member 4d stops at the second position 4g, even when the operation handle 4 is operated, the projection 4e of the displacement member 4d does not come in contact with the pressure-sensitive conductive rubber 84, and thus, the pressure-sensitive conductive rubber 84 is not pressed. In other words, since no electrodes are conducted, the delay circuit 36b judges the delay function is ineffective, and performs no delay motion.

FIG. 29 shows another constitution example of the delay function selection switch 82. In this constitution example, the delay function selection switch 82 consists of plural minute push-on switches 85 arranged in the first direction. A contact portion 85a of the push-on switch is biased to protrude outward from a housing 86 by a spring not illustrated, so that it will be switched on only when the contact portion 85a is pushed into an inside of the housing 86. Therefore, when the operation handle 4 is operated, the projection 4e of the displacement member 4d contacts the contact portion 85a of either push-on switch 85 and the contact portion 85a is pushed into the inside of the housing 86, the delay circuit 36b sets a delay time and performs a delay motion. In addition, in the case that the displacement member stops at the second position 4g, even when the operation handle 4 is operated, the projection 4e of the displacement member 4d comes in contact with neither contact portion 85a of the push-on switch 85, and thus, neither push-on switch 85 is switched on. In other words, since neither push-on switch 85 outputs any signal, the delay circuit 36b judges the delay function is ineffective, and performs no delay motion.

### (Fourth Modified Example of the Second Embodiment)

FIG. 30 is a drawing showing a constitution of an electronic switch module 8 in a fourth modified example. In this modified example, the electronic switch module 8 is constituted by a terminal module 2 to which electric wires 5 are connected and a switching function module. The terminal module 2 comprises the above inlets 21 and outlets 22. The switching function module 3 is detachably attached to the terminal module, and comprises a push-on / push-off switch 33, a control circuit 36, a delay circuit 36b and a delay function selection switch 82, and so on.

In this modified example, it is assumed that the terminal module 2 is installed on an installation frame 6 (SIC: 9) beforehand. In such a case, since the electronic switch module 8 is divided to the terminal module 2 and the switching function module 3, a user can change or improve the function of the load control switch 1 by changing the switching function module 3 and the operation handle 4 without accompanying electrical works.

### (Applied Example)

FIG. 31 shows an applied example of a load control switch 1 in the above third or fourth modified example. As for a load control switch in the applied example, it shows a constitution of a switch for a restroom 1A which interlocks a lighting installation and a ventilation fan. As is generally known, the switch for a restroom which interlocks the illumination and the ventilation fan turns on the lighting installation and the ventilation fan simultaneously when a single operation handle is operated once, and turns off the lighting installation when the single operation handle is operated again and turns off the ventilation fan after passing a predetermined time period. The switch for a restroom 1A which interlocks an illumination and a ventilation fan is constituted by an electronic switch module 8 having a delay function (a delay function module) and an electronic switch module 8B and a single operation handle 4C attached to two electronic switch modules 8 and 8B simultaneously. The electronic switch module 8 is a delayed off switch module which turns on a load when the operation handle 4C is operated as on operation and turns off the load after passing a predetermined time period when operated as off operation, in particular. The electronic switch module 8B is the simplest electronic module having no delay circuit and no external signal input terminals. Besides, a switch module having a mechanical switch can be used instead of the electronic switch module 8B.

The operation handle 4C is an operation handle called "single" having approximately the same size as that of a rectangular opening formed on a decorative plate, for example. Two bearings 42 are formed on a rear face 41 of the operation handle 4 corresponding to bracing shafts 34 of two electronic switch modules 8 and 8B. In addition, two projections 43 (first projections) are provided corresponding to push-on / push-off switches of the two electronic switch modules 8 and 8B. Furthermore, a projection 4e is provided corresponding to the delay function selection switch 82 of the electronic switch module 8.

In this way, the switch for a restroom which interlocks an illumination and a ventilation fan, which was conventionally manufactured and dispensed as exclusive use, can be constituted by combination of multi-purposed switch modules by applying the load control switches and the load control switch system in accordance with the present invention. Therefore, a large reduction in cost can be realized.

The invention is based on Japanese patent application 2010-261773, Japan patent application 2010-261780, Japan patent application 2010-261609 and Japan patent application 2010-261619. Furthermore, this invention is based on Japan patent application 2010-261787 and Japan patent application 2010-261631. Contents of this application should be united in the present invention referring to specifications and drawings of the above mentioned patent applications, consequently.

In addition, the present invention is not limited to the constitutions of the above first and second embodiments and various modified examples of the embodiments, so that various modifications are enabled for any purpose. For example, either mode in the first and second embodiments and various modified examples of the embodiments can be combined with another mode.

In addition, as for the simplest constitution of the switching function module 3, a mechanical switch comprising a movable contact and a stationary contact can be recited. For example, it is considered a rocker switch (seesaw switch) that the movable contact contacts the stationary contact when an operation handle is rotated in a direction around a bracing shaft thereof and the movable contact departs from the stationary contact when the operation handle is rotated in reverse direction. In case of the rocker switch, it is desirable that the operation handle is formed symmetrical with respect to the bracing shaft. Alternatively, it is considered a mechanical push-on / push-off switch comprising a movable contact and a stationary contact (not illustrated because of public knowledge). Although These mechanical switches are low cost, though functions themselves are simple only to switch on and off of the loads.

In addition, although the cases using electric waves are described as the wireless signal transmission and reception function, it is not limited to those, and it may be a wireless signal transmission and reception function using infrared rays.

### EXPLANATION OF SYMBOLS

- A: load control switch system
- 1: load control switch
- 2: terminal module
- 21: inlets
- 22: outlets
- 3: switching function module
- 31: sockets
- 32: mounting surface
- 33: push-on / push-off switch
- 34: bracing shaft
- 35: circuit board
- 36: control circuit (control circuit of electronic switch)
- 36b: delay circuit
- 37, 37A: first contacts (external signal input terminals)
- 38: plug outlet
- 4: operation handle
- 4d: displacement member
- 4e: projection (second projection)
- 4f: first position
- 4g: second position
- 41: rear face
- 42, 42A, 42B: bearing
- 43: projection (first projection)
- 44: circuit board
- 45: external electronic circuit
- 45a: radio signal reception circuit
- 45b: radio signal transmission and reception circuit
- 46: volume (light control volume / time setting volume)
- 47, 47A, 47B: second contacts (output terminals)
- 48: visual indication unit (LED)
- 49: function selection switch
- 5: electric wires
- 51: core wires
- 61: motion sensor
- 62: illumination sensor
- 63, 64: antenna
- 65: primary battery
- 66: generation element
- 67: secondary battery
- 68: control circuit
- 7: wireless remote control device
- 71: operation button unit
- 72: control unit (control signal output unit)
- 73: transmission and reception unit
- 74: indication unit (load control state informing unit)
- 75: built-in battery
- 76: informing unit
- 77: battery running out detection unit
- 8: electronic switch module
- 82: delay function selection switch
- 83: electrodes
- 84: pressure-sensitive conductive rubber
- 84a: contact face
- 9: installation frame
- 11: bracing shaft
- 12A to 12C, 13A to 13C: movable units

## Claims

1. A load control switch comprising: a terminal module which is mounted on a installation frame established on a wall surface of a building and to which electric wires are connected; a switching function module which is detachably attached to the terminal module and has at least a switching function to control turning on and off of a load; and an operation handle which is detachably attached to the switching function module.

2. The load control switch in accordance with claim 1,
**characterized by** that
the switching function module is an electronic switch using a semiconductor switch element as a main switch element; and
a push-on / push-off switch operated by the operation handle is provided on a mounting surface of the switching function module to which the operation handle is attached.

3. The load control switch in accordance with claim 2, **characterized by** that
at least two first contacts are provided on the mounting surface of the switching function module;
at least two second contacts which contact the first contacts are provided on a rear face of the operation handle facing the mounting surface of the switching function module; and
an external electronic circuit which is connected to a control circuit of the electronic switch through the first contacts and the second contacts is provided in an inside of the operation handle.

4. The load control switch in accordance with claim 3, **characterized by** that
the external electronic circuit includes a motion sensor and an illumination sensor; and
the control circuit of the electronic switch controls turning on and off of the load corresponding to a detection signal outputted from the motion sensor and the illumination sensor.

5. The load control switch in accordance with claim 3, **characterized by** that
the control circuit of the electronic switch or the external electronic circuit includes a delay circuit; and
when the push-on / push-off switch is switched off responding to the operation of the operation handle, the load is turned off after passing a predetermined time period.

6. The load control switch in accordance with claim 3, **characterized by** that
the control circuit of the electronic switch includes a light control circuit; and
the external electronic circuit includes a light control volume which is operated by a use and serves as a part of the light control circuit.

7. The load control switch in accordance with one of claim 3 to claim 6, **characterized by** that
the external electronic circuit includes an indication element.

8. The load control switch in accordance with claim 1, **characterized by** that
the switching function module is a mechanical push-on / push-off switch comprising a movable contact and a stationary contact; and
the operation handle is formed asymmetry with respect to a bracing shaft thereof.

9. The load control switch in accordance with claim 1, **characterized by** that
the switching function module is a rocker switch comprising a movable contact and a stationary contact, wherein the movable contact contacts the stationary contact when the operation handle is rotated in a direction around a bracing shaft thereof and the movable contact departs from the stationary contact when the operation handle is rotated in reverse direction; and
the operation handle is formed symmetrical with respect to the bracing shaft.

10. The load control switch in accordance with one of claim 1 to claim 9, **characterized by** that
the terminal module is a type in a three wire system; and
a plug outlet is provided on the mounting surface of the switching function module.

11. The load control switch in accordance with claim 1, **characterized by** that
the switching function module has an electronic switch function for controlling turning on and off of the load corresponding to a control signal inputted from outside; and
the operation handle has a radio signal reception circuit for receiving the control signal transmitted from a wireless remote control device.

12. The load control switch in accordance with claim 11, **characterized by** that
the switching function module is an electronic switch using a semiconductor switch element as a main switch element;
at least two first contacts to which the control signal is inputted and a push-on / push-off switch operated by the operation handle are provided on a mounting surface of the switching function module to which the operation handle is attached;
at least two second contacts which contact the first contacts are provided on a rear face of the operation handle facing the mounting surface of the switching function module; and
the radio signal reception circuit is provided in an inside of the operation handle and connected to the control circuit of the electronic switch through the first contacts and the second contacts.

13. The load control switch in accordance with claim 12, **characterized by** that
the first contacts and the second contacts are respectively provided more than two, and driving electric power is supplied from the electronic switch to the wireless signal reception circuit through the first contacts and the second contacts.

14. The load control switch in accordance with claim 12, **characterized by** that
driving electric power is supplied to the radio signal reception circuit from a primary battery which is built in the operation handle.

15. The load control switch in accordance with claim 12, **characterized by** that
the radio signal reception circuit (SIC: operation handle) comprises an electric generation element and a secondary battery into which electric power generated by the electric generation element is charged; and
driving electric power is supplied to the radio signal reception circuit from the electric generation element or the secondary battery.

16. The load control switch in accordance with one of claim 11 to claim 15, **characterized by** that
the control circuit of the electronic switch includes a light control circuit;
the radio signal reception circuit receives a light control signal transmitted from the wireless remote control device; and
the light control circuit controls a lighting installation as the load corresponding to the light control signal.

17. The load control switch in accordance with one of claim 11 to claim 16, **characterized by** that
the operation handle has an approximately square shape in a front view, and attachable to the mounting surface of the switching function module in two directions which are perpendicular to each other.

18. The load control switch in accordance with one of claim 11 to claim 16, **characterized by** that
the radio signal reception circuit has plural signal receiving antennas arranged in different directions, and selects a most suitable signal reception antenna corresponding to signal reception condition.

19. The load control switch in accordance with claim 1, **characterized by** that
the switching function module has an electronic switch function for controlling turning on and off of the load depending on a control signal inputted from outside; and
the operation handle has a radio signal transmission and reception circuit for transmitting and receiving a signal between a wireless remote control device and it, and a control circuit.

20. The load control switch in accordance with claim 19, **characterized by** that
when the radio signal transmission and reception circuit receives a control signal from the wireless remote control device, the control circuit replies a reply signal which expresses confirmation of signal reception to the wireless remote control device.

21. The load control switch in accordance with claim 19, **characterized by** that
when the radio signal transmission and reception circuit receives a control signal for search from any wireless remote control device, the control circuit generates a reply signal for search which makes the wireless remote control device start an informing motion, and the radio signal transmission and reception circuit transmits the reply signal for search to plural wireless remote control devices which can communicate.

22. The load control switch in accordance with claim 21, **characterized by** that
the operation handle further comprises a switch to transmit the reply signal to the plural wireless remote control devices which can communicate with the load control switch.

23. The load control switch in accordance with claim 22, **characterized by** that
the operation handle further comprises a battery running out detection circuit for detecting battery running out of a built-in battery; and
when the battery running out is detected by the battery running out detection circuit, the control circuit transmits an operation signal which makes the wireless remote control device start an information motion to plural wireless remote control devices which can communicate.

24. A load control switch comprising plural electronic switch modules and a single operation handle detachably attached to the plural electronic switch module, wherein
the operation handle receives a control signal transmitted from a wireless remote control device, and inputs the control signal to any one of or all of the plural electronic modules corresponding to contents of the control signal which is received.

25. A load control switch comprising plural electronic switch modules which are installed on an installation frame established on a wall surface of a building, a single operation handle detachably attached to the plural electronic switch modules directly or indirectly, wherein
the electronic switch module uses a semiconductor switch element as a main switch element and has external signal input terminals, a push-on / push-off switch and a control circuit for controlling conduction and non-conduction of the main switch element, each; and
the operation handle has plural movable sections which are detachably attached to the plural electronic switch modules respectively, and individually operates the push-on / push-off switches and has output terminals connected to the external signal input terminals, and a single radio signal reception circuit which receives a control signal transmitted from a wireless remote control device and outputs the control signal to any one of or all of the plural electronic modules corresponding to contents of the control signal received.

26. The load control switch in accordance with claim 25, **characterized by** that
the plural electronic switch modules are arranged for the installation frame in a vertical direction; and
the single operation handle has a bracing shaft vertically formed along arrangement of the plural electronic switch modules in a state that it is attached to the plural electronic switch modules, and the movable sections each is formed in a shape of a cantilever from the bracing shaft to face the external input terminals and the push-on / push-off switch.

27. The load control switch in accordance with claim 25, **characterized by** that
the plural electronic switch modules are arranged for the installation frame in a vertical direction; and
the single operation handle is formed in a plate shape for covering arrangement of the plural electronic switch modules in a state that it is attached to the plural electronic switch modules, and slits are formed that portions facing the push-on / push-off switches of the plural electronic switch modules are independently deformable.

28. The load control switch in accordance with one of claim 25 to claim 27, **characterized by** that
the plural electronic modules each is constituted by at least a terminal module to which electric wires are connected, and a switching function module which is detachably attached to the terminal module and has a switch function to control turning on and off of the load.

29. A load control switch comprising an electronic switch module having a delay function and an operation handle detachably attached to the electronic switch module, wherein the electronic switch module has a delay function selection switch serving as a delay time setting switch, and the operation handle has a displacement member for selectively switching on the delay function selection switch corresponding to a position thereof.

30. A load control switch comprising an electronic switch module which is installed on an installation frame established on a wall surface of a building and an operation handle detachably attached to the electronic switch module, wherein
the electronic switch module has a push-on / push-off switch, a load control circuit for controlling turning on and off of the load, a delay circuit for turning off the load after passing a predetermined time period after the push-on / push-off switch is pushed off, and a delay function selection switch used for setting a delay time and for enabling a function of the delay circuit;
the operation handle has a first projection which contacts the push-on / push-off switch and a displacement member having a second projection which contacts the delay function selection switch; and
the delay circuit varies the delay time corresponding to a position at which the second projection of the displacement member contacts the delay function selection switch.

31. The load control switch in accordance with claim 30, **characterized by** that
the displacement member can be displaced between plural first positions arranged in a first direction at which the second projection of the displacement member contacts the delay function selection switch and a single second position at which it does not contact he delay function selection switch.

32. The load control switch in accordance with claim 31, **characterized by** that
the second position is displaced in a second direction that is perpendicular to the first direction with respect to an arrangement of the plural first positions.

33. The load control switch in accordance with claim 31 or claim 32, **characterized by** that
the delay function selection switch is constituted by plural electrodes arranged in the first direction and a pressure-sensitive conductive rubber having a contact face of a rectangle shape that a longer side thereof corresponds to the first direction and covers whole of the arranged plural electrodes, and the delay circuit is constituted that different electrodes or combination of different electrodes are conducted corresponding to a contact position of the second projection and the contact face.

34. The load control switch in accordance with claim 32, **characterized by** that
the delay function selection switch is configured by plural push-on switches arranged in the first direction.

35. The load control switch in accordance with one of claim 30 to claim 34, **characterized by** that
the electronic modules is constituted by a terminal module to which electric wires are connected, and a switching function module which is detachably attached to the terminal module and has the control circuit, the delay circuit and the delay function selection switch.

36. A load control switch system constituted by:
a terminal module which is installed on an installation frame established on a wall surface of a building and to which electric wires are connected;
plural switching function modules which are detachably attached to the terminal module and each has at least a switching function to turn on and turn off of a load; and
plural operation handles detachably attached to the switching function module each, wherein
a load control switch is constituted by attaching a switching function module selected among the plural switching function modules and an operation handle selected among the plural operation handles on the terminal module.

37. The load control switch system in accordance with claim 36, **characterized by** that
one of the plural switching function modules is an electronic switch using a semiconductor switch element as a main switch element; and
a push-on / push-off switch is provided on a mounting surface of the switching function module to which the operation handle is attached.

38. The load control switch system in accordance with claim 37, **characterized by** that
at least two first contacts are provided on the mounting surface of the switching function module;
at least two second contacts which contact with the first contacts are provided on a rear face, which faces the mounting surface of the switching function module, of the operation handle which meets the switching function module; and
an external electronic circuit which is connected to a control circuit of the electronic switch through the first contacts and the second contacts is provided in an inside of the operation handle.

39. The load control switch system in accordance with claim 38, **characterized by** that
the external electronic circuit is configured of a radio signal reception circuit.

40. The load control switch system in accordance with claim 36, further comprising a wireless remote control device which performs a remote control of the load control switch; wherein
one of the plural switching function modules has an electronic switch function to control turning on and off of the load depending on a control signal inputted from outside;
an operation handle which meets the switching function module among the plural operation handles has a radio signal transmission and reception circuit transmits for transmitting and receiving signals between the wireless remote control device and it and a control circuit; and wherein
the wireless remote control device comprises:
a control signal output unit which generates a control signal to control the switching function module;
a signal transmission and reception unit which transmits and receives signals to and from the radio signal transmission and reception circuit to perform the remote control of the switching function module; and
a load state information unit which informs a load control state by the switching function module to a user depending on a result of signal transmission and reception between the signal transmission and reception unit and the radio signal transmission and reception circuit.

41. The load control switch system in accordance with claim 40, **characterized by** that
when the radio signal transmission and reception circuit receives a control signal from the wireless remote control device, the control circuit of the operation handle replies a reply signal which expresses confirmation of signal reception of the control signal to the wireless remote control device.

42. The load control switch system in accordance with claim 41, **characterized by** that
when the transmission and reception unit received a reply signal or when it could not receive the reply signal, the load control state information unit renews contents of the load control state via sense of vision or sense of hearing.

43. The load control switch system in accordance with claim 41, **characterized by** that
when the reply signal could not received within a predetermined time period after transmitting the control signal to the load control switch, the control signal output unit of the wireless remote control device retransmits the control signal to the load control switch.

44. The load control switch system in accordance with claim 43, **characterized by** that
when the replay signal could not received even though the control signals was retransmitted to the load control switch, the control signal output unit of the wireless remote control device renews contents of information of the load control state information unit.

45. The load control switch system in accordance with claim 43, **characterized by** that
the load control switch system has plural wireless remote control devices or plural load control switches; and
when the control signal is received, the control signal output unit of the wireless remote control device or the control circuit of the load control switch relays to transmit the control signal to another load control switch.

46. The load control switch system in accordance with claim 40, **characterized by** that
the radio signal transmission and reception circuit transmits a load control state signal of the switching function module to the wireless remote control device at a predetermined interval; and
when the signal transmission and reception unit receives the load control state signal, the control signal output unit of the wireless remote control device renews contents of information of the load control state information unit based on the load control state signal.

47. The load control switch system in accordance with claim 40, **characterized by** that
driving electric power is supplied to the radio signal transmission and reception circuit and the control circuit from a primary battery built in the operation handle.

48. The load control switch system in accordance with claim 40, **characterized by** that
the operation handle has an electric generation element and a secondary battery, into which electric power generated by the electric generation element is charged, and driving electric power is supplied to the radio signal transmission and reception circuit and the control circuit of the operation handle from the electric generation element or the secondary battery.

49. The load control switch system in accordance with claim 36, **characterized by** that
the system comprises plural wireless remote control devices that controls at least one load control switch remotely when any one of the wireless remote control devices is used;
in the load control switch (SIC),
one of the plural switching modules has an electronic switch function to control turning on and off of a load depending on a control signal inputted from outside;
an operation handle which meets the switching function module among the plural operation handles has a radio signal transmission and reception circuit which transmits and receives signal between the wireless remote control device and it, and a control circuit; and
the plural wireless remote control devices each comprises:
a control signal output unit which generates a control signal to control the switching function module;
a signal transmission and reception unit which transmits and receives radio signals to and from the radio signal transmission and reception circuit for controlling the switching function module remotely; and
an information unit which informs a location of the wireless remote control device; wherein
when the radio signal transmission and reception circuit receives a control signal for searching another wireless remote control device from the wireless remote control device, the control circuit generates a reply signal for search, and the radio signal transmission and reception circuit replies the reply signal to the plural wireless remote control devices which can communicate in the load control switch system; and
when the signal transmission and reception unit of each wireless remote control device receives the reply signal, the information unit performs an information motion.

50. The load control switch system in accordance with claim 49, **characterized by** that
the information motion of the information unit is a motion to inform the location of the wireless remote control device via sense of vision or sense of hearing.

51. The load control switch system in accordance with claim 49 or claim 50, **characterized by** that
the operation handle further comprises a switch for search to search a location of the wireless remote control device in the load control switch system;
the control circuit transmits a reply signal for search to drive the information unit through the radio signal transmission and reception circuit to the plural wireless remote control devices; and
when the signal transmission and reception unit receives the reply signal, the information unit performs an information movement.

52. The load control switch system in accordance with one of claim 49 to claim 51, **characterized by** that
the wireless remote control device further comprises a battery running out detection unit for detecting battery running out of a built-in battery;
when the battery running out is detected by the battery running out detection unit, the control signal output unit transmits an information circuit driving signal to the radio signal transmission and reception circuit;
the operation handle further comprises an information circuit to inform the battery running out of the wireless remote control device to a user, when the radio signal transmission and reception circuit receives the information circuit driving signal.

53. The load control switch system in accordance with one of claim 49 to claim 52, **characterized by** that
the operation handle further comprises a battery running out detection unit for detecting battery running out of a built-in battery;
when the battery running out is detected by the battery running out detection unit, the control circuit transmits an information unit driving signal to start driving of the information unit of the wireless remote control device; and
when the signal transmission and reception unit receives above information unit driving signal, the information unit performs the information motion that inform battery running out of the operation handle to a user.

54. A load control switch system constituted by plural kinds of switch modules each installed on an installation frame established on a wall surface of a building and having at least a switching function to turn on and turn off of a load, and plural kinds of operation handles detachably attached to the switch module, wherein
a load control switch is constituted by attaching an operation handles selected among the plural kinds of operation handles on a switch module selected among the plural kinds of switch modules.

55. The load control switch system in accordance with claim 54, **characterized by** that
one of the plural kinds of switch module is an electronic switch module using a semiconductor switch element as a main switch element, and has external signal input terminals, a push-on / push-off switch and a control circuit to control conduction and non-conduction of the main switch element; and
one of the plural kinds of operation handles is detachably attached to plural electronic modules in a state that the plural electronic modules are installed on the installation frame, and has a plurality of movable sections each operates the push-on / push-off switch individually and has output terminals connected to the external signal input terminals, and a single radio signal reception circuit which receives a control signal transmitted from a wireless remote control device, and inputs the control signal to one of or all of the plural electronic switch modules through the output terminals and the external signal input terminals corresponding to contents of the received control signal.

56. The load control switch system in accordance with claim 56, **characterized by** that
one of the plural kinds of switch modules of is a delay function module having a push-on / push-off switch, a load control circuit which controls turning on and turning off of the load, a delay circuit which turns off the load after passing a predetermined time period after the push-on / push-off switch is pushed off, and a delay function selection switch which sets a delay time and enables a function of the delay circuit;
one of the plural kinds of operation handles has a first projection which contacts the push-on / push-off switch, and a displacement member having a second projection which contacts the delay function selection switch; and
when an operation handle having the displacement member is attached to the delay function module, the delay circuit varies the delay time corresponding to a position at which the second projection of the displacement member contacts the delay function selection switch.

57. The load control switch system in accordance with claim 56, **characterized by** that
the displacement member is able to displace between plural first positions arranged in a first direction at which the second projection contacts the delay function selection switch and a single second position at which the second projection does not contact the delay function selection switch.

58. The load control switch system in accordance with claim 56 or claim 57, **characterized by** that
the delay function module is constituted by a terminal module to which electric wires are connected, and a switching function module which is detachably attached to the terminal module and has the control circuit, the delay circuit and the delay function selection switch.

59. The load control switch system in accordance with claim 56, **characterized by** that
the delay function module is a delayed off switch module that turns on the load when an operation handle is operated an on-operation and turns off the load after passing a predetermined time period when operated an off-operation;
another one of the plural kinds of switch modules is a normally on/off switch module which turns on the load when the operation handle is operated the on-operation and turns off when operated the off-operation;
another one of the plural kinds of operation handles is a single operation switch which is attached to two switch modules simultaneously; and
a switch for a restroom which interlocks a lighting installation and a ventilation fan is constituted by the delayed off switch module and the on/off switch module and the single operation switch.
